# EUROPEAN PATENT SPECIFICATION

(11) **EP 3 038 368 B1**
(45) Date of publication and mention of the grant of the patent: **09.09.2020**
(21) Application number: 13893357.7
(22) Date of filing: 13.09.2013
(51) Int. Cl.: H04N 21/235, H04L 29/06, H04N 21/61, H04N 21/845, H04N 21/8543, H04W 4/06

(54) **METHOD AND SYSTEM FOR TRANSMITTING STREAMING MEDIA, USER EQUIPMENT, AND SERVER**
VERFAHREN UND SYSTEM ZUR ÜBERTRAGUNG VON STREAMING-MEDIEN, BENUTZERVORRICHTUNG UND SERVER
PROCÉDÉ ET SYSTÈME DE TRANSMISSION DE DONNÉES MULTIMÉDIAS EN CONTINU, ÉQUIPEMENT D'UTILISATEUR, ET SERVEUR

(43) Date of publication of application: 29.06.2016
(73) Proprietor: Huawei Technologies Co., Ltd., Longgang District Shenzhen, Guangdong 518129 (CN)
(72) Inventor: LI, Zhiming, Shenzhen Guangdong 518129 (CN); WEI, Anni, Shenzhen Guangdong 518129 (CN)
(74) Representative: Pfenning, Meinig & Partner mbB
(86) International application number: PCT/CN2013/083511
(87) International publication number: WO 2015/035622

(56) References cited:
- CN-A- 101 110 722
- CN-A- 101 155 353
- CN-A- 102 651 852
- QUALCOMM INCORPORATED ET AL: "Rationale for USD Indication of DASH Delivery Mode and Illustrative", 3GPP DRAFT; S4-130196 RATIONALE FOR USD INDICATION OF TRANSPORT MODE AND ILLUSTRATIVE IMPLEMENTATION, 3RD GENERATION PARTNERSHIP PROJECT (3GPP), MOBILE COMPETENCE CENTRE ; 650, ROUTE DES LUCIOLES ; F- , vol. SA WG4, no. Valencia, Spain; 20130128 - 20130201 30 January 2013 (2013-01-30), XP050687588, Retrieved from the Internet: URL:http://www.3gpp.org/ftp/tsg_sa/WG4_COD EC/TSGS4_72/Docs/ [retrieved on 2013-01-30]
- HUAWEI TECHNOLOGIES CO LTD: "Use Cases for the Enhanced MBMS Operation WI", 3GPP DRAFT; S4-130532 - USE CASES FOR THE ENHANCED MBMS OPERATION WI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. SA WG4, no. Qingdao, China; 20130415 - 20130419 17 April 2013 (2013-04-17), XP050710503, Retrieved from the Internet: URL:http://www.3gpp.org/ftp/tsg_sa/WG4_COD EC/TSGS4_73/Docs/ [retrieved on 2013-04-17]
- QUALCOMM INCORPORATED: "MPD Profiling to Support DASH over MBMS", 3GPP DRAFT; S4-120448 CR 26.346-0249 REV 1 MPD CHANGES TO SUPPORT DASH OVER MBMS (RELEASE 11), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Tokyo, Japan; 20120416 - 20120420, 11 April 2012 (2012-04-11), XP050639091, [retrieved on 2012-04-11]
- THOMAS STOCKHAMMER ET AL: "Dash in mobile networks and services", VISUAL COMMUNICATIONS AND IMAGE PROCESSING (VCIP), 2012 IEEE, IEEE, 27 November 2012 (2012-11-27), pages 1-6, XP032309240, DOI: 10.1109/VCIP.2012.6410826 ISBN: 978-1-4673-4405-0

## Description

### TECHNICAL FIELD

The present invention relates to the field of communications technologies, and in particular, to a streaming media transmission method and system, user equipment, and a server.

### BACKGROUND

With the continuous development of information technologies, streaming media service traffic may account for a larger percentage in a network, and a streaming media transmission technology has become a focus of people's attention. The Dynamic Adaptive Streaming over Hypertext Transfer Protocol (Hypertext transfer protocol, HTTP for short) (Dynamic Adaptive Streaming over HTTP, DASH for short) is an HTTP-based streaming media transmission technology. This technology can dynamically adapt to a change of a wireless channel and has advantages of simple deployment and being not affected by a firewall, and is expected to be a next-generation mainstream streaming media transmission technology.

The DASH technology is mainly implemented based on a unicast manner, and a specific implementation process is as follows: first, UE acquires a media presentation description (Media Presentation Description, MPD for short) file of to-be-played media from a DASH server, where the MPD file includes multiple media representations (Representation) of the to-be-played media, each representation corresponds to one quality level of the to-be-played media, and each Representation includes one or more media segments (Segment); then, the UE may select a segment of a different representation in the acquired MPD file according to a transmission situation of a current network and acquires a media content segment corresponding to the segment, so as to adjust a quality level of requested media in real time.

In addition to obtaining the to-be-played media by using the DASH technology based on the unicast manner, the UE may also obtain the to-be-played media in a multimedia broadcast multicast service (Multimedia Broadcast Multicast Service, MBMS for short) manner. In order to achieve objectives of saving transmission resources and providing better service quality for more users by using limited resources, when the UE is in an MBMS service area and services may be provided in the MBMS manner for a requested service, a network operator tends to provide a service for a user by using MBMS.

When a service is provided for the UE in the MBMS manner, if mobility of a user or another reason causes that when receiving an MBMS service, the UE exits the MBMS service area or is in another case of being incapable of receiving the MBMS service, a streaming media service is interrupted, and the user cannot continue to receive subsequent content. In this case, if the UE still wants to receive the streaming media service, the UE needs to initiate a unicast process, and re-acquires the MPD file and the content segment of the to-be-played media from the DASH server; as a result, continuity of the streaming media service cannot be ensured.

"Rationale for USD Indication of DASH Delivery Mode and Illustrative", 3GPP DARF; S4-130196 relates to a mechanism for RTP-based streaming delivery to fall back to unicast delivery, when MBMS bearers are not usable or available. This is indicated by the alternativeAccessDelivery child of the deliveryMethod element, which, when present, contains one or more one unicastAccessURI elements that identify PSS server(s) from which the same streaming content can be retrieved. Having the unicast-based alternative delivery information carried in the USD would provide missing functionality of fall-back to unicast delivery of the DASH Media Presentation.

"Use Cases for the Enhanced MBMS Operation WI", 3GPP DRAFT; S4-130532 relates to a use case of a UE which may be present inside or outside MBMS broadcast coverage and the switching between HTTP-based unicast delivery and MBMS download delivery method.

### SUMMARY

The invention is defined in the appended independent claims. To solve a problem in the prior art that streaming media cannot be directly switched from multicast to unicast, and continuity of a streaming media service cannot be ensured, embodiments of the present invention provide a streaming media transmission method and system, user equipment, and a server. The technical solutions are as follows.

According to one aspect, an embodiment of the present invention provides a streaming media transmission method, where the method includes:
receiving, by user equipment UE, user service description USD information and a media presentation description MPD file of a first media file, where the first media file includes a media stream file at at least one quality level, the media stream file at each quality level separately includes one media content segment or more continuous media content segments, the USD information includes a delivery method element, the delivery method element includes indication information, the indication information is used for indicating a first media stream file that is of the first media file and sent in a unicast manner, and the indication information is further used for instructing the UE to acquire a media content segment of the first media stream file from a packet switched streaming service, PSS, server in a unicast manner when the UE is not in an MBMS service area; and
when the UE is not in an MBMS service area, acquiring a media content segment of the first media stream file from the PSS server in a unicast manner according to the indication information; where the indication information includes first unicast transmission information, the first unicast transmission information includes a first URI, a second URI, and a corresponding relationship between the first URI and the second URI, the first URI is used for indicating an entry address of the first media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server;
wherein the acquiring a media content segment of the first media stream file from the PSS server in a unicast manner according to the indication information includes:
   determining a second URI of the first media stream file or a second URI of a currently-to-be-acquired media content segment of the first media stream file according to the corresponding relationship between the first URI and the second URI in the indication information;
   sending a media content segment request to the PSS server according to the determined second URI; and
   receiving the media content segment, from the PSS server, of the first media stream file.

According to another aspect, an embodiment of the present invention further provides another streaming media transmission method, where the method includes:
sending user service description USD information of a first media file and an MPD file of the first media file in a broadcast manner, where the first media file includes a media stream file at at least one quality level, the media stream file at each quality level separately includes one media content segment or more media content segments, the USD information includes a delivery method element, the delivery method element includes indication information, the indication information is used for indicating a first media stream file that is of the first media file and sent in a unicast manner, and the indication information is further used for instructing UE to acquire a media content segment of the first media stream file from a packet switched streaming service, PSS, server in a unicast manner when the UE is not in an MBMS service area, where the indication information includes first unicast transmission information, the first unicast transmission information includes a first URI, a second URI, and a corresponding relationship between the first URI and the second URI, the first URI is used for indicating an entry address of the first media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server.

According to another aspect, an embodiment of the present invention provides user equipment, where the user equipment includes:
a receiving module, configured to receive user service description USD information and a media presentation description MPD file of a first media file, where the first media file includes a media stream file at at least one quality level, the media stream file at each quality level separately includes one media content segment or more continuous media content segments, the USD information includes a delivery method element, the delivery method element includes indication information, the indication information is used for indicating a first media stream file that is of the first media file and sent in a unicast manner, and the indication information is further used for instructing the UE to acquire a media content segment of the first media stream file from a packet switched streaming service, PSS, server in a unicast manner when the UE is not in an MBMS service area; and
a media segment acquiring module, configured to: when the UE is not in an MBMS service area, acquire a media content segment of the first media stream file from the PSS server in a unicast manner according to the indication information, where the indication information includes first unicast transmission information, the first unicast transmission information includes a first URI, a second URI, and a corresponding relationship between the first URI and the second URI, the first URI is used for indicating an entry address of the first media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server;
wherein the media segment acquiring module includes:
   a first determining unit, configured to determine a second URI of the first media stream file or a second URI of a currently-to-be-acquired media content segment of the first media stream file according to the corresponding relationship between the first URI and the second URI in the indication information;
   a first sending unit, configured to send a media content segment request to the PSS server according to the determined second URI; and
   a first receiving unit, configured to receive the media content segment, from the PSS server, of the first media stream file.

According to still another aspect, an embodiment of the present invention provides a server, where the server includes:
a sending module, configured to send user service description USD information of a first media file and an MPD file of the first media file in a broadcast manner, where the first media file includes a media stream file at at least one quality level, the media stream file at each quality level separately includes one media content segment or more media content segments, the USD information includes a delivery method element, the delivery method element includes indication information, the indication information is used for indicating a first media stream file that is of the first media file and sent in a unicast manner, and the indication information is further used for instructing UE to acquire a media content segment of the first media stream file from a packet switched streaming service, PSS,server in a unicast manner when the UE is not in an MBMS service area, where the indication information includes first unicast transmission information, the first unicast transmission information includes a first URI, a second URI, and a corresponding relationship between the first URI and the second URI, the first URI is used for indicating an entry address of the first media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server.

According to yet another aspect, an embodiment of the present invention further provides user equipment, where the user equipment includes a memory and one or more programs, where the one or more programs are stored in the memory and one or more processors are configured to execute the one or more programs, and the one or more programs include instructions used for performing the following operations:
receiving, by the user equipment UE, user service description USD information and a media presentation description MPD file of a first media file, where the first media file includes a media stream file at at least one quality level, the media stream file at each quality level separately includes one media content segment or more continuous media content segments, the USD information includes a delivery method element, the delivery method element includes indication information, the indication information is used for indicating a first media stream file that is of the first media file and sent in a unicast manner, and the indication information is further used for instructing the UE to acquire a media content segment of the first media stream file from a specified server in a unicast manner when the UE is not in an MBMS service area; and when the UE is in an MBMS service area, acquiring a media content segment of a second media stream file of the first media file in a broadcast manner according to the MPD file; or
when the UE is not in an MBMS service area, acquiring a media content segment of the first media stream file from the specified server in a unicast manner according to the indication information.

Optionally, the specified server is a packet switched streaming service PSS server.

In an implementation manner of this embodiment of the present invention, the indication information includes first unicast transmission information, the first unicast transmission information includes a first URI, a second URI, and a corresponding relationship between the first URI and the second URI, the first URI is used for indicating an entry address of the first media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server.

Further, the one or more programs further include instructions used for performing the following operations:
determining a second URI of the first media stream file or a second URI of a currently-to-be-acquired media content segment of the first media stream file according to the corresponding relationship between the first URI and the second URI in the indication information;
sending a media content segment request to the specified server according to the determined second URI; and
receiving the media content segment, sent by the specified server, of the first media stream file.
In another implementation manner of this embodiment of the present invention, the indication information includes second unicast transmission information, and the second unicast transmission information is used for indicating information about an entry address of the specified server; and
the one or more programs further include instructions used for performing the following operations:
   generating, according to the second unicast transmission information, an extended message for requesting the media content segment, and requesting the media content segment of the first media stream file of the first media file from the specified server.

Optionally, the indication information further includes first broadcast transmission information, the first broadcast transmission information includes a broadcast URI, and the broadcast URI is used for indicating an entry address of the second media stream file of the first media file or a download address of the media content segment of the second media stream file in the original server.

Further, the one or more programs further include instructions used for performing the following operations:
receiving and locally saving the media content segment, sent in a broadcast manner, of the second media stream file;
determining a broadcast URI of a currently-to-be-acquired media content segment of the second media stream file according to the MPD file and the first broadcast transmission information; and
searching, according to the determined broadcast URI, an FDT file of the USD information for a file transport identifier TOI corresponding to the broadcast URI, and acquiring the currently-to-be-acquired media content segment of the second media stream file from the locally-saved media content segment according to the found TOI.

Optionally, the one or more programs further include instructions used for performing the following operations:
receiving and locally saving the media content segment, sent in a broadcast manner, of the second media stream file;
determining a URI of a currently-to-be-acquired media content segment according to the MPD file;
determining, according to the first broadcast transmission information, whether the URI of the currently-to-be-acquired media content segment is a broadcast URI; and
when the URI of the currently-to-be-acquired media content segment is a broadcast URI, searching an FDT file of the USD information for a file transport identifier TOI corresponding to the URI of the currently-to-be-acquired media content segment, and acquiring the currently-to-be-acquired media content segment from the locally-saved media content segment according to the found TOI; or
when the URI of the currently-to-be-acquired media content segment is not a broadcast URI, acquiring the currently-to-be-acquired media content segment from the specified server in a unicast manner.

Optionally, the one or more programs further include instructions used for performing the following operations:
receiving and locally saving the media content segment, sent in a broadcast manner, of the second media stream file;
determining a URI of a currently-to-be-acquired media content segment according to the MPD file;
determining whether the URI of the currently-to-be-acquired media content segment exists in an FDT file of the USD information; and
when the URI of the currently-to-be-acquired media content segment exists in the FDT file of the USD information, searching the FDT file of the USD information for a file transport identifier TOI corresponding to the URI of the currently-to-be-acquired media content segment, and acquiring the currently-to-be-acquired media content segment from the locally-saved media content segment according to the found TOI; or
when the URI of the currently-to-be-acquired media content segment does not exist in the FDT file of the USD information, acquiring the currently-to-be-acquired media content segment from the specified server in a unicast manner.

According to still yet another aspect, an embodiment of the present invention further provides a server, where the server includes a memory and one or more programs, where the one or more programs are stored in the memory and one or more processors are configured to execute the one or more programs, and the one or more programs include an instruction used for performing the following operation:
sending user service description USD information of a first media file and an MPD file of the first media file in a broadcast manner, where the first media file includes a media stream file at at least one quality level, the media stream file at each quality level separately includes one media content segment or more media content segments, the USD information includes a delivery method element, the delivery method element includes indication information, the indication information is used for indicating a first media stream file that is of the first media file and sent in a unicast manner, and the indication information is further used for instructing UE to acquire a media content segment of the first media stream file from a specified server in a unicast manner when the UE is not in an MBMS service area.

Optionally, the specified server is a packet switched streaming service PSS server.

In an implementation manner of this embodiment of the present invention, the indication information includes first unicast transmission information, the first unicast transmission information includes a first URI, a second URI, and a corresponding relationship between the first URI and the second URI, the first URI is used for indicating an entry address of the first media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server.

Further, the one or more programs further include instructions used for performing the following operations:
receiving a media stream file of the first media file, and synchronizing the received media stream file to the specified server; and
acquiring a second URI of the media stream file synchronized to the specified server, and constructing the USD information of the first media file according to the second URI.

In another implementation manner of this embodiment of the present invention, the indication information includes second unicast transmission information, and the second unicast transmission information is used for indicating information about an entry address of the specified server.

Optionally, the indication information further includes first broadcast transmission information, the first broadcast transmission information includes a broadcast URI, and the broadcast URI is used for indicating an entry address of a second media stream file of the first media file or a download address of a media content segment of the second media stream file in the original server.

According to further another aspect, an embodiment of the present invention further provides a streaming media transmission system, where the system includes the foregoing user equipment, the foregoing server, and a specified server.

The technical solutions of the embodiments of the present invention have the following beneficial effects:
Indication information is added in a delivery method element of USD information of a first media file, so as to instruct, by using the indication information, UE to continue to acquire the first media file in a unicast manner from a specified server when the UE exits an MBMS service area or is in another case of being incapable of receiving an MBMS service, thereby implementing switch of the first media file from broadcast to unicast, and ensuring continuity of a streaming media service.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an architecture of a 3GP-DASH system;
FIG. 2 is a flowchart of a streaming media transmission method according to an embodiment of the present invention;
FIG. 3 is a flowchart of another streaming media transmission method according to an embodiment of the present invention;
FIG. 3a is a schematic diagram of indication information provided in the embodiment shown in FIG. 3;
FIG. 4 is a flowchart of still another streaming media transmission method according to an embodiment of the present invention;
FIG. 5 is a schematic structural diagram of user equipment according to an embodiment of the present invention;
FIG. 6 is a schematic structural diagram of another piece of user equipment according to an embodiment of the present invention;
FIG. 7 is a schematic structural diagram of a server according to an embodiment of the present invention;
FIG. 8 is a schematic structural diagram of another piece of user equipment according to an embodiment of the present invention; and
FIG. 9 is a schematic structural diagram of a streaming media transmission system according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

To help understand the present invention, the following describes in detail a streaming media transmission method of the present invention by using 3GP-DASH as an example. It is easily known that the embodiments of the present invention are not only applicable to 3GP-DASH, but also applicable to streaming media transmission technologies such as Moving Pictures Experts Group (Moving Pictures Experts Group, MPEG)-DASH.

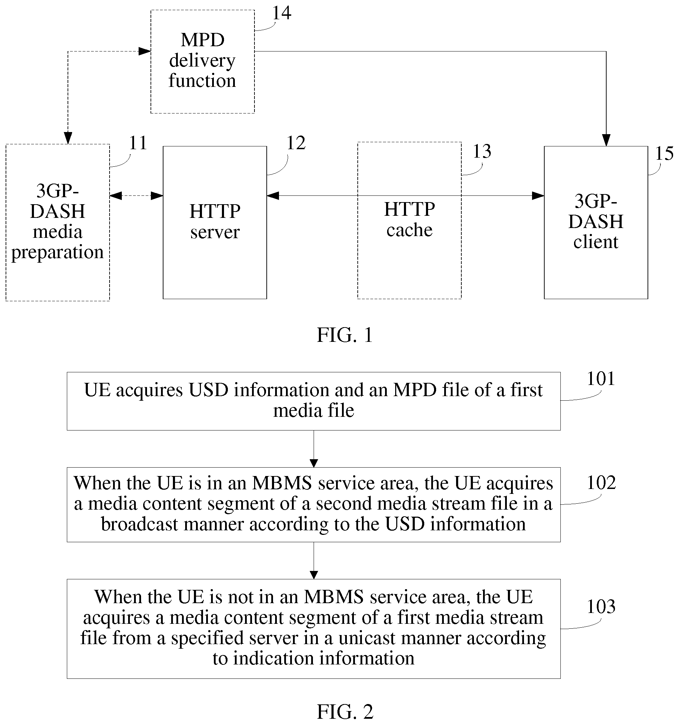

The following first briefly introduces an architecture of a 3GP-DASH system with reference to FIG. 1. As shown in FIG. 1, the architecture of the 3GP-DASH system includes five parts, namely, 3GP-DASH media preparation 11, an HTTP server 12, an HTTP cache 13, an MPD delivery function 14, and a 3GP-DASH client 15.

The 3GP-DASH media preparation 11 needs to encode original media content with respect to different quality levels by using different rules, where the quality level is generally measured by using a media bit rate, and a larger media bit rate indicates a higher quality level. Then, the 3GP-DASH media preparation 11 segments the encoded media content to generate 3GP-DASH media content segments, where a format of the media content segments uses a file format defined by the 3rd Generation Partnership Project (The 3rd Generation Partnership Project, 3GPP for short), such as a 3GP format. Duration of the media content segments may be fixed, or may also be unfixed. During segmentation, an MPD file is further generated and is used for describing basic information of each media content segment and a composition relationship between the media content segments. A hierarchical data model of the MPD file includes four parts, which are as follows in ascending order: a media segment (segment), a representation (representation), an adaptation set (adaptation set), and a period (period). Each media segment describes information, such as a media format, duration, and a corresponding URL, of each media content segment. Media segments form the representation, and each representation corresponds to one media bit rate. Representations including same media content form an adaptation set, that is, each adaptation set includes representations of multiple bit rates that can be dynamically switched. Adaptation sets form a period, and different periods have different start times. Multiple periods form an entire media presentation description file. For example, the MPD file includes two representations, and bit rates corresponding to the two representations are 2048 kbps and 1024 kbps respectively. The representation corresponding to the bit rate 2048 kbps includes four periods, and each period includes 99 media segments; using the third period as an example, media segments of the third period may be represented as per-3/rep-2048/seg1 to per-3/rep-2048/seg99. Similarly, the representation corresponding to the bit rate 1024 kbps includes four periods, and each period includes 99 media segments; using the third period as an example, media segments of the third period may be represented as per-3/rep-1024/seg1 to per-3/rep-1024/seg99. The MPD file may be implemented by using the Extensible Markup Language (Extensible Markup Language, XML for short).

The MPD delivery function 14 is configured to send the MPD file to the 3GP-DASH client 15; generally, this function may be implemented by the HTTP server 12. Because 3GP-DASH does not limit a manner of acquiring, by the client, the MPD, this function is separated in the architecture. For example, the 3GP-DASH client 15 may also obtain the MPD file by using an e-mail or in an ftp download manner.

The 3GP-DASH media content segment delivery function, that is, the HTTP server 12 stores prepared media content segment file and MPD file. After receiving a service request from the 3GP-DASH client 15, the HTTP server 12 sends media data to the 3GP-DASH client 15.

The 3GP-DASH client 15 may be various user equipment supporting the 3GP-DASH function, such as a personal computer (Personal Computer, PC for short), and a mobile phone.

The general HTTP cache 13 may be deployed between the HTTP server 12 and the 3GP-DASH client 15, and may be configured to implement faster media content delivery with higher efficiency.

FIG. 2 shows a streaming media transmission method according to an embodiment of the present invention. As shown in FIG. 2, the method includes:
101: UE acquires USD information and an MPD file of a first media file.

The first media file includes a media stream file at at least one quality level, and the media stream file at each quality level includes one media content segment or more media content segments. Usually, the quality level is described in a representation, and may be a resolution, a bit rate, or the like, different representations correspond to different quality levels, and the representation may further include description information such as a language and a caption. The multiple media content segments are obtained after original media content of the first media file is encoded with respect to different quality levels by using different rules and the encoded media content is segmented. The MPD file of the first media file is used for describing each representation of the first media file, a relationship between each representation and media content segment, basic information of each media content segment of the first media file, and a composition relationship between the media content segments, which have been described above and are not described herein again.

The USD information includes a delivery method (delivery method) element, the delivery method element includes indication information, and the indication information is used for indicating a first media stream file that is of the first media file and sent in a unicast manner. The indication information may also be used for indicating a second media stream file that is of the first media file and sent in a broadcast manner. Quality levels (that is, a bit rate in a representation (representation)) of the first media stream file and the second media stream file may be partially the same (for example, the second media stream file may be a media stream file whose bit rate corresponding to a representation is 2048 kbps, the first media stream file includes media stream files of three different representations, and bit rates corresponding to the three different representations are 2048 kbps, 1024 kbps, and 512 kbps respectively), or may also be totally different (for example, the second media stream file may be a media stream file whose bit rate corresponding to a representation is 2048 kbps, and the first media stream file includes two media stream files whose bit rates corresponding to representations are 1024 kbps and 512 kbps).

It is easily known that, in addition to the delivery method element, usually, the USD information may further include a start time (start time) and service duration (duration) of a multimedia broadcast multicast service (Multimedia Broadcast Multicast Service, MBMS for short) selectable by a user, an MBMS service area identification list (MBMS Service Area Identification list, MBMS SAI list for short), and one or more frequencies for playing the MBMS.

In an implementation manner of this embodiment, the MPD file may be directly carried in the USD information, and the UE acquires the USD information and the MPD file simultaneously. In another implementation manner of this embodiment, a manner of acquiring, by the UE, the USD information and the MPD file of the first media file may include: first acquiring, by the UE, the USD information, where the acquired USD information includes an URL of the MPD file; then, after the UE determines to join an MBMS service, sending, by a BM-SC, the MPD file to the UE in a broadcast manner.

Specifically, the USD information of the first media file is generated by the BM-SC when the BM-SC receives the first media file. The UE may acquire the USD information of the first media file in a broadcast manner (that is, the BM-SC directly sends the USD information to the UE in a broadcast manner), or may also acquire the USD information of the first media file in a non-broadcast manner (for example, in a unicast manner, or by using an Email) (that is, the USD information sent by the BM-SC in a broadcast manner is forwarded to the UE by using another device). The present invention does not limit the manner of acquiring, by the UE, the USD information of the first media file.

102: When the UE is in an MBMS service area, acquire a media content segment of a second media stream file in a broadcast manner according to the USD information.

103: When the UE is not in an MBMS service area, acquire a media content segment of a first media stream file from a specified server in a unicast manner according to indication information.

Specifically, whether the UE is in the MBMS service area may be determined in the following manners:
First: Determine whether a cell in which the UE is currently located supports an MBMS service.
Second: Determine whether MBMS service area information of a cell in which the UE is currently located matches service area information included in the USD information.
Third: Determine whether the UE can acquire the media content segment of the second media stream file from broadcast information.

It is easily known that, the UE may determine, in the foregoing manners in real time, whether the UE is in the MBMS service area; once it is determined that the UE is not in the MBMS service area, the UE determines, according to the acquired last media content segment of the second media stream file, a media content segment that needs to be acquired in a unicast manner.

For example, the UE initiates a request according to the MPD file, where the last media content segment, acquired by using a broadcast channel, of the second media stream file is the seventh segment in the third period, and a next requested object of the UE is the eighth segment in the third period of the second media stream file. In this case, it is determined that the media content segment that needs to be acquired in a unicast manner is the eighth segment in the third period.

Optionally, when the first media stream file includes media stream files at multiple quality levels, the UE needs to select, according to a current network transmission situation (for example, a data transmission rate), a media stream file at a quality level corresponding to the current network transmission situation. A specific selection method is the same as that in the prior art, and detailed descriptions are omitted herein.

In this embodiment of the present invention, indication information is added in a delivery method element of USD information of a first media file, so as to instruct, by using the indication information, UE to continue to acquire the first media file, requested by the UE, from a specified server in a unicast manner when the UE is not in an MBMS service area, thereby implementing switch of the first media file from broadcast to unicast, and ensuring continuity of a streaming media service. In addition, because the indication information is carried in the delivery method element in this embodiment of the present invention, minor modification is made to the USD information, and the method is easily promoted and applied.

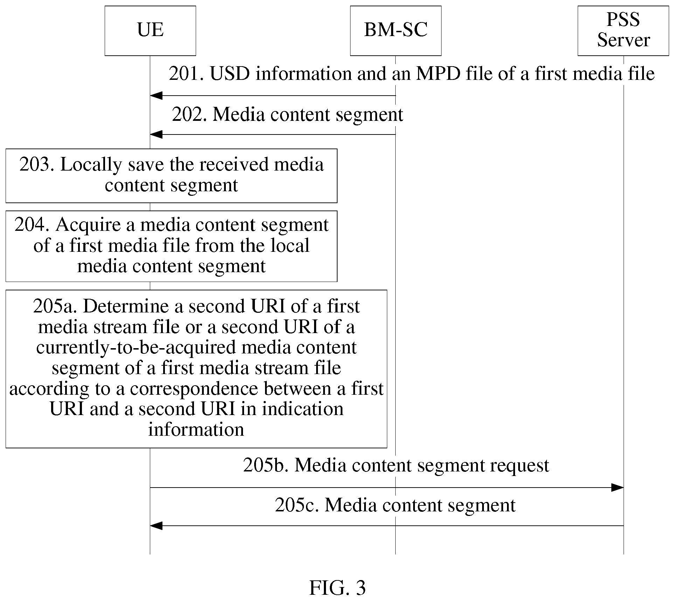

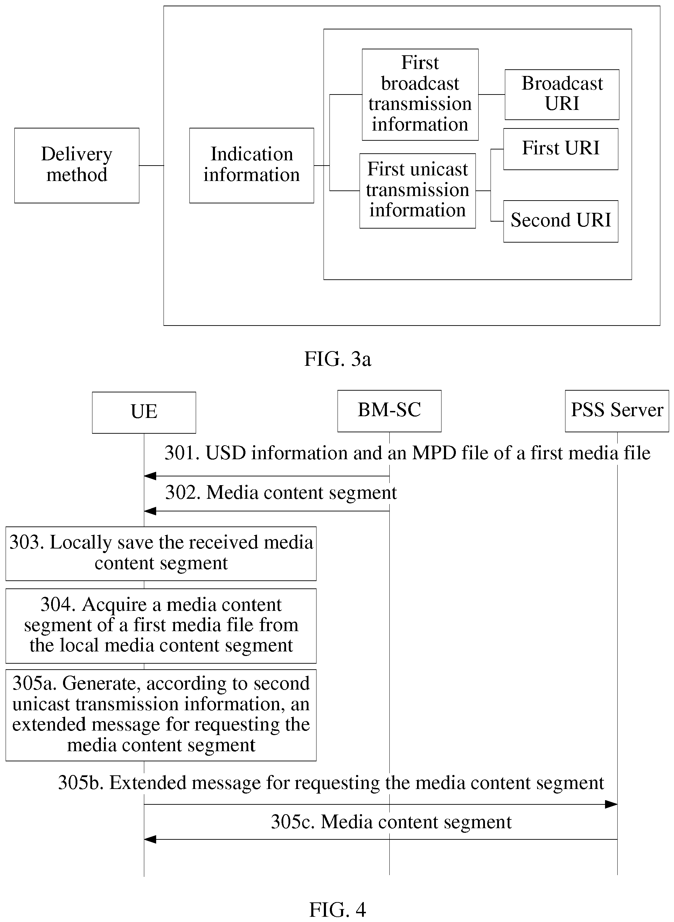

FIG. 3 shows a streaming media transmission method according to an embodiment of the present invention. In this embodiment, indication information carried in USD information includes a first URI, a second URI, and a corresponding relationship between the first URI and the second URI, where the first URI is used for indicating an entry address of a first media stream file of a first media file in an original server or a download address of a media content segment of a first media stream file in the original server, and the second URI is used for indicating an entry address of the first media stream file of the first media file in a PSS server or a download address of the media content segment of the first media stream file in the PSS server. Referring to FIG. 3, the method includes:
201: A BM-SC sends USD information and an MPD file of a first media file in a broadcast manner, and UE in an MBMS service area receives the USD information and the MPD file of the first media file.

In this embodiment, the UE first needs to subscribe to a service (in this embodiment, the service refers to acquiring the first media file), and when receiving a service announcement (service announcement), the UE receives the USD information of the first media file, and a user chooses, according to needs, whether to join the MBMS service.

It should be noted that, although in this embodiment, the UE receives the USD information that is sent by the BM-SC in a broadcast manner, the present invention is not limited thereto, and the UE may acquire the USD information in another manner, such as in a unicast manner or by using an Email.

The first media file includes a media stream file at at least one quality level, and the media stream file at each quality level includes one or more media content segments. Usually, the quality level is described in a representation, and may be a resolution, a bit rate, or the like, different representations correspond to different quality levels, and the representation may further include description information such as a language and a caption. The multiple media content segments are obtained after original media content of the first media file is encoded with respect to different quality levels by using different rules and the encoded media content is segmented. The MPD file of the first media file is used for describing each representation of the first media file, a relationship between each representation and media content segment, basic information of each media content segment of the first media file, and a composition relationship between the media content segments, which have been described above and are not described herein again.

The USD information includes a delivery method (delivery method) element, the delivery method element includes indication information, and the indication information is used for indicating a first media stream file that is of the first media file and sent in a unicast manner. The indication information may also be used for indicating a second media stream file that is of the first media file and sent in a broadcast manner. Quality levels (that is, representations) of the first media stream file and the second media stream file may be partially the same (for example, the second media stream file may be a media stream file whose bit rate corresponding to a representation is 2048 kbps, the first media stream file includes media stream files of three different representations, and bit rates corresponding to the three different representations are 2048 kbps, 1024 kbps, and 512 kbps respectively), or may also be totally different (for example, the second media stream file may be a media stream file whose bit rate corresponding to the representation is 2048 kbps, and the first media stream file includes two media stream files whose bit rates corresponding to representations are 1024 kbps and 512 kbps).

In this embodiment, in addition to the delivery method element, the USD information further includes a file delivery table instance (File Delivery Table Instance, FDT Instance), which is used for indicating an MPD file and a transport identifier (Transport Identifier, TOI) of a media content segment indexed by the MPD file.

It is easily known that, in addition to the delivery method element, the USD information usually may further include a start time and service duration of an MBMS selectable by the user, an MBMS SAI list, and one or more frequencies for playing the MBMS.

In this embodiment, step 201 may include:
First: The BM-SC sends the USD information of the first media file to the UE in the MBMS service area in a broadcast manner.
Second: The BM-SC sends the MPD file of the first media file to the UE in the MBMS service area in a broadcast manner.

Specifically, in this embodiment, the BM-SC may encapsulate the media content segment into the File Delivery over Unidirectional Transport (File Delivery over Unidirectional Transport, FLUTE for short)/User Datagram Protocol (User Datagram Protocol, UDP for short)/Internet Protocol (Internet Protocol, IP for short) for transmission.

In another embodiment of the present invention, the MPD file may be directly carried in the USD information of the first media file.

Preferably, in this embodiment, a specified server is the PSS server, and the PSS server may be an HTTP server supporting DASH file transmission, and is equivalent to a local data storage device. The PSS server preferably saves all representations (that is, a union set of the second media stream file and the first media stream file) of the first media file; in this case, a transmission distance between a content memory and the user is closer, thereby improving the transmission efficiency. It is easily known that, the PSS server may further only save a representation (that is, the first media stream file) that is of the first media file and loaded to a unicast bearer. Content of the first media stream file and/or the second media stream file in the PSS server may be simultaneously acquired by the BM-SC. For example, after acquiring and storing the first media file and the MPD file, the BM-SC simultaneously stores the first media file and the MPD file into the PSS server by using FTP, and mirror software.

Certainly, the specified server may also be an original HTTP server. The original HTTP server may be a content provider, such as a content server of the youtube website, or a content server of a content provider of a content delivery network (Content Delivery Network, CDN).

Further, when the specified server is the PSS server, the method in this embodiment may further include:
receiving, by the BM-SC, a media stream file of the first media file, and synchronizing the received media stream file to the specified server; and
acquiring, by the BM-SC, a second URI of the media stream file synchronized to the specified server, and constructing the USD information of the first media file according to the second URI.

Further, the acquiring, by the BM-SC, a second URI of the media stream file synchronized to the specified server may be implemented in the following two manners:
First: The BM-SC constructs the second URI according to a storage location of the first media file in the PSS server and the MPD file.

For example, the BM-SC knows that an address of the PSS server is http://pss-server.operator.com, and learns according to the MPD file that a media segment corresponding to a media content segment currently synchronized to the PSS server is per-3/rep-2048/seg01; then, the BM-SC may construct that the second URI of the media content segment is http://pss-server.operator.com/per-3/rep-2048/seg01.3gp.

Second: The PSS server constructs the second URI according to a storage location of the first media file in the PSS server and the MPD file, and notifies the BM-SC of the second URI.

In a first implementation manner of this embodiment, as shown in FIG. 3a, the indication information (during specific implementation, the indication information may be carried in a DASHunicastAccess subelement of the deliverymethod element) includes first broadcast transmission information (represented by a broadcastContent subelement) and first unicast transmission information (represented by a unicastContent subelement), where the first broadcast transmission information includes a broadcast URI (a serviceURI in the broadcastContent subelement), the broadcast URI is used for indicating an entry address of the second media stream file of the first media file in the original server; the first unicast transmission information includes a first URI (a serviceURI in the unicastContent subelement), a second URI (an IdenticalserviceURI in the unicastContent subelement), and a corresponding relationship (the service URI in the unicastContent subelement is in one-to-one corresponding relationship to the IdenticalserviceURI in the unicastContent subelement) between the first URI and the second URI, the first URI is used for indicating a download address of the media content segment of the first media stream file (that is, a media stream file loaded to a unicast bearer) of the first media file in the original server, and the second URI is used for indicating a download address of the media content segment of the first media stream file of the first media file in the PSS server.

In this first implementation manner, content of the USD information may use the following forms:
- FDT-Instance
   - File.ContentLocation='http://example.com/program-a.mpd'
   - File.TOI='10'
   - File.ContentLocation= 'http://example.com/per-3/rep-2048/seg01.3gp'
   - File.TOI='101'
   - File.ContentLocation= 'http://example.com/per-3/rep-2048/seg02.3gp'
   - File.TOI='102'
   - File.ContentLocation= 'http://example.com/per-3/rep-2048/seg03.3gp'
   - File.TOI='103
   - File.ContentLocation= 'http://example.com/per-3/rep-2048/seg04.3gp'
   - File.TOI='104
   - File.ContentLocation= 'http://example.com/per-3/rep-2048/seg05.3gp'
   - File.TOI='105
   - File.ContentLocation= 'http://example.com/per-3/rep-2048/seg06.3gp'
   - File.TOI='106
   - File.ContentLocation= 'http://example.com/per-3/rep-2048/seg07.3gp'
   - File.TOI='107
   - File.ContentLocation= 'http://example.com/per-3/rep-2048/seg08.3gp'
   - File.TOI='108
   - File.ContentLocation= 'http://example.com/per-3/rep-2048/seg09.3gp'
   - File.TOI='109
   - File.ContentLocation= 'http://example.com/per-3/rep-2048/seg10.3gp'
   - File.TOI='110
   - File.ContentLocation= 'http://example.com/per-4/rep-2048/seg01.3gp'
   - File.TOI='120'
   - File.ContentLocation= 'http://example.com/per-5/rep-2048/seg99.3gp' File.TOI='130'
- userServiceDescription.deliveryMethod.r12:unicastAccessDASH instance
   - broadcastContent.serviceURI=' http://example.com/per-3/rep-2048'
   - boradcastContent.serviceURI=' http://example.com/per-4/rep-2048'
   - unicastContent
      - serviceURI==' http://example.com/per-3/rep-2048/seg01.3gp' identicalServiceURI='http://pss-server.operator.com/per-3/rep-2048/seg01.3gp'
      - serviceURI==' http://example.com/per-3/rep-1024/seg01.3gp' identicalServiceURI='http://pss-server.operator.com/per-3/rep-1024/seg01.3gp'
      - serviceURI==' http://example.com/per-3/rep-512/seg01.3gp' identicalServiceURI='http://pss-server.operator.com/per-3/rep-512/seg01.3gp'
      - serviceURI==' http://example.com/per-4/rep-2048/seg01.3gp' identicalServiceURI='http://pss-server.operator.com/per-4/rep-2048/seg01.3gp'
      - serviceURI==' http://example.com/per-4/rep-1024/seg01.3gp' identicalServiceURI='http://pss-server.operator.com/per-4/rep-1024/seg01.3gp'
      - serviceURI==' http://example.com/per-4/rep-512/seg01.3gp' identicalServiceURI='http://pss-server.operator.com/per-4/rep-512/seg01.3gp'

In a second implementation manner of this embodiment, as shown in FIG. 3a, the indication information (during specific implementation, the indication information may be carried in a DASHunicastAccess subelement of the deliverymethod element) includes first broadcast transmission information (represented by a broadcastContent subelement) and first unicast transmission information (represented by a unicastContent subelement), where the first broadcast transmission information includes a broadcast URI (a serviceURI in the broadcastContent subelement), the broadcast URI is used for indicating a download address of a media content segment of the second media stream file in the original server; the first unicast transmission information includes a first URI (a service URI in the unicastContent subelement), a second URI (an IdenticalserviceURI in the unicastContent subelement), and a corresponding relationship (the service URI in the unicastContent subelement is in one-to-one corresponding relationship to the IdenticalserviceURI in the unicastContent subelement) between the first URI and the second URI, the first URI is used for indicating a download address of the media content of the first media stream file of the first media file in the original server, and the second URI is used for indicating a download address of the media content segment of the first media stream file of the first media file in the PSS server.

In this second implementation manner, content of the USD information may use the following forms:
- FDT-Instance
   - File.ContentLocation='http://example.com/program-a.mpd'
   - File.TOI='10'
   - File.ContentLocation= 'http://example.com/per-3/rep-2048/seg01.3gp'
   - File.TOI='101'
   - File.ContentLocation= 'http://example.com/per-3/rep-2048/seg02.3gp'
   - File.TOI='102'
   - File.ContentLocation= 'http://example.com/per-3/rep-2048/seg03.3gp'
   - File.TOI='103
   - File.ContentLocation= 'http://example.com/per-3/rep-2048/seg04.3gp'
   - File.TOI='104
   - File.ContentLocation= 'http://example.com/per-3/rep-2048/seg05.3gp'
   - File.TOI='105
   - File.ContentLocation= 'http://example.com/per-3/rep-2048/seg06.3gp'
   - File.TOI='106
   - File.ContentLocation= 'http://example.com/per-3/rep-2048/seg07.3gp'
   - File.TOI='107
   - File.ContentLocation= 'http://example.com/per-3/rep-2048/seg08.3gp'
   - File.TOI='108
   - File.ContentLocation= 'http://example.com/per-3/rep-2048/seg09.3gp'
   - File.TOI='109
   - File.ContentLocation= 'http://example.com/per-3/rep-2048/seg10.3gp'
   - File.TOI='110
   - File.ContentLocation= 'http://example.com/per-4/rep-2048/seg01.3gp'
   - File.TOI='120'
   - File.ContentLocation= 'http://example.com/per-5/rep-2048/seg99.3gp' File.TOI='130'
- userServiceDescription.deliveryMethod.r12:unicastAccessDASH instance
   - broadcastContent.serviceURI=' http://example.com/per-3/rep-2048/seg01.3gp'
   - broadcastContent.serviceURI=' http:example.com/per-3/rep-2048/seg-02.3gp'
   - boradcastContent.serviceURI=' http://example.com/per-4/rep-2048/seg01.3gp'
   - unicastContent
      - serviceURI==' http://example.com/per-3/rep-2048/seg01.3gp' identicalServiceURI='http://pss-server.operator.com/per-3/rep-2048/seg01'
      - serviceURI==' http://example.com/per-3/rep-1024/seg01' identicalServiceURI='http://pss-server.operator.com/per-3/rep-1024/seg01'
      - serviceURI==' http://example.com/per-3/rep-512/seg01' identicalServiceURI='http://pss-server.operator.com/per-3/rep-512/seg01'
      - serviceURI==' http://example.com/per-4/rep-2048/seg01' identicalServiceURI='http://pss-server.operator.com/per-4/rep-2048/seg01'
      - serviceURI==' http://example.com/per-4/rep-1024/seg01' identicalServiceURI='http://pss-server.operator.com/per-4/rep-1024/seg01'
      - serviceURI==' http://example.com/per-4/rep-512/seg01' identicalServiceURI='http://pss-server.operator.com/per-4/rep-512/seg01'

In a third implementation manner of this embodiment, as shown in FIG. 3a, the indication information (during specific implementation, the indication information may be carried in a DASHunicastAccess subelement of the deliverymethod element) includes first broadcast transmission information (represented by a broadcastContent subelement) and first unicast transmission information (represented by a unicastContent subelement), where the first broadcast transmission information includes a broadcast URI (a serviceURI in the broadcastContent subelement), the broadcast URI is used for indicating an entry address of the second media stream file in the original server; the first unicast transmission information includes a first URI (a service URI in the unicastContent subelement), a second URI (an IdenticalserviceURI in the unicastContent subelement), and a corresponding relationship (the service URI in the unicastContent subelement is in one-to-one corresponding relationship to the IdenticalserviceURI in the unicastContent subelement) between the first URI and the second URI, the first URI is used for indicating an entry address of the first media stream file of the first media file in the original server, and the second URI is used for indicating an entry address of the first media stream file of the first media file in the PSS server.

In this third implementation manner, content of the USD information may use the following forms:
- FDT-Instance
   - File.ContentLocation='http://example.com/program-a.mpd'
   - File.TOI='10'
   - File.ContentLocation= 'http://example.com/per-3/rep-2048/seg01.3gp'
   - File.TOI='101'
   - File.ContentLocation= 'http://example.com/per-3/rep-2048/seg02.3gp'
   - File.TOI='102'
   - File.ContentLocation= 'http://example.com/per-3/rep-2048/seg03.3gp'
   - File.TOI='103
   - File.ContentLocation= 'http://example.com/per-3/rep-2048/seg04.3gp'
   - File.TOI='104
   - File.ContentLocation= 'http://example.com/per-3/rep-2048/seg05.3gp'
   - File.TOI='105
   - File.ContentLocation= 'http://example.com/per-3/rep-2048/seg06.3gp'
   - File.TOI='106
   - File.ContentLocation= 'http://example.com/per-3/rep-2048/seg07.3gp'
   - File.TOI='107
   - File.ContentLocation= 'http://example.com/per-3/rep-2048/seg08.3gp'
   - File.TOI='108
   - File.ContentLocation= 'http://example.com/per-3/rep-2048/seg09.3gp'
   - File.TOI='109
   - File.ContentLocation= 'http://example.com/per-3/rep-2048/seg10.3gp'
   - File.TOI='110
   - File.ContentLocation= 'http://example.com/per-4/rep-2048/seg01.3gp'
   - File.TOI='120'
   - File.ContentLocation= 'http://example.com/per-5/rep-2048/seg99.3gp' File.TOI='130'
- userServiceDescription.deliveryMethod.r12:unicastAccessDASH instance
   - broadcastContent.serviceURI=' http://example.com/per-3/rep-2048'
   - boradcastContent.serviceURI=' http://example.com/per-4/rep-2048'
   - unicastContent
      - serviceURI==' http://example.com/per-3/rep-2048' identicalServiceURI='http://pss-server.operator.com/per-3/rep-2048'
      - serviceURI==' http://example.com/per-3/rep-1024' identicalServiceURI='http://pss-server.operator.com/per-3/rep-1024'
      - serviceURI==' http://example.com/per-3/rep-512' identicalServiceURI='http://pss-server.operator.com/per-3/rep-512'
      - serviceURI==' http://example.com/per-4/rep-2048' identicalServiceURI='http://pss-server.operator.com/per-4/rep-2048'
      - serviceURI==' http://example.com/per-4/rep-1024' identicalServiceURI='http://pss-server.operator.com/per-4/rep-1024'
      - serviceURI==' http://example.com/per-4/rep-512' identicalServiceURI='http://pss-server.operator.com/per-4/rep-512'

In a fourth implementation manner of this embodiment, as shown in FIG. 3a, the indication information (during specific implementation, the indication information may be carried in a DASHunicastAccess subelement of the deliverymethod element) includes first broadcast transmission information (represented by a broadcastContent subelement) and first unicast transmission information (represented by a unicastContent subelement), where the first broadcast transmission information includes a broadcast URI (a serviceURI in the broadcastContent subelement), the broadcast URI is used for indicating a download address of the media content segment of the second media stream file in the original server; the first unicast transmission information includes a first URI (a service URI in the unicastContent subelement), a second URI (an IdenticalserviceURI in the unicastContent subelement), and a corresponding relationship (the service URI in the unicastContent subelement is in one-to-one corresponding relationship to the IdenticalserviceURI in the unicastContent subelement) between the first URI and the second URI, the first URI is used for indicating an entry address of the first media stream file of the first media file, and the second URI is used for indicating an entry address of the first media stream file of the first media file in the PSS server.

In this fourth implementation manner, content of the USD information may use the following forms:
- FDT-Instance
   - File.ContentLocation='http://example.com/program-a.mpd'
   - File.TOI='10'
   - File.ContentLocation= 'http://example.com/per-3/rep-2048/seg01.3gp'
   - File.TOI='101'
   - File.ContentLocation= 'http://example.com/per-3/rep-2048/seg02.3gp'
   - File.TOI='102'
   - File.ContentLocation= 'http://example.com/per-3/rep-2048/seg03.3gp'
   - File.TOI='103
   - File.ContentLocation= 'http://example.com/per-3/rep-2048/seg04.3gp'
   - File.TOI='104
   - File.ContentLocation= 'http://example.com/per-3/rep-2048/seg05.3gp'
   - File.TOI='105
   - File.ContentLocation= 'http://example.com/per-3/rep-2048/seg06.3gp'
   - File.TOI='106
   - File.ContentLocation= 'http://example.com/per-3/rep-2048/seg07.3gp'
   - File.TOI='107
   - File.ContentLocation= 'http://example.com/per-3/rep-2048/seg08.3gp'
   - File.TOI='108
   - File.ContentLocation= 'http://example.com/per-3/rep-2048/seg09.3gp'
   - File.TOI='109
   - File.ContentLocation= 'http://example.com/per-3/rep-2048/seg10.3gp'
   - File.TOI='110
   - File.ContentLocation= 'http://example.com/per-4/rep-2048/seg01.3gp'
   - File.TOI='120'
   - File.ContentLocation= 'http://example.com/per-5/rep-2048/seg99.3gp' File.TOI='130'
- userServiceDescription.deliveryMethod.r12:unicastAccessDASH instance
   - broadcastContent.serviceURI=' http://example.com/per-3/rep-2048/seg01.3gp'
   - broadcastContent.serviceURI='http:example.com/per-3/rep-2048/seg-02.3gp'
   - boradcastContent.serviceURI=' http://example.com/per-4/rep-2048/seg01.3gp'
   - unicastContent
      - serviceURI==' http://example.com/per-3/rep-2048' identicalServiceURI='http://pss-server.operator.com/per-3/rep-2048'
      - serviceURI==' http://example.com/per-3/rep-1024' identicalServiceURI='http://pss-server.operator.com/per-3/rep-1024'
      - serviceURI==' http://example.com/per-3/rep-512' identicalServiceURI='http://pss-server.operator.com/per-3/rep-512'
      - serviceURI==' http://example.com/per-4/rep-2048' identicalServiceURI='http://pss-server.operator.com/per-4/rep-2048'
      - serviceURI==' http://example.com/per-4/rep-1024' identicalServiceURI='http://pss-server.operator.com/per-4/rep-1024'
      - serviceURI==' http://example.com/per-4/rep-512' identicalServiceURI='http://pss-server.operator.com/per-4/rep-512'

202: The BM-SC sends the media content segment to the UE in a service area in a broadcast manner.

Specifically, the BM-SC may encapsulate the media content segment into the FLUTE/UDP/IP protocol for transmission.

203: The UE locally saves the received media content segment.

204: The UE acquires the media content segment of the first media file from the locally-saved media content segment according to the MPD file and first broadcast transmission information in a delivery method element.

Specifically, in this embodiment, step 204 includes:
determining, according to the MPD file and the first broadcast transmission information in the delivery method element, a broadcast URI of a currently-to-be-acquired media content segment of the second media stream file (for example, the URI of the media content segment that may be acquired in a broadcast manner is first determined according to the first broadcast transmission information, and then the broadcast URI of the currently-to-be-acquired media content segment is determined according to the MPD file, and the URI of the media content segment that may be acquired in a broadcast manner); and
searching, according to the broadcast URI, an FDT file of the USD information for a TOI corresponding to the broadcast URI, and acquiring the media content segment from the locally-saved media content segment according to the found TOI.

During specific implementation, in the foregoing first implementation manner, the UE knows by using the indication information (the broadcastContent subelement) in the delivery method element that a media stream file (that is, the second media stream file) whose bit rate corresponding to the representation is 2048 kbps may be acquired in a broadcast manner. It is assumed that the URI of the media content segment currently to be acquired by the UE is http://example.com/per-3/rep-2048/seg01.3gp, the "rep-2048" in the http://example.com/per-3/rep-2048/seg01.3gp matches the bit rate corresponding to the representation and being 2048 kbps, the UE determines that the URI may be acquired in a broadcast manner, and is a broadcast URI, and determines in the FDT that the TOI of the media content segment is 101, and further, the UE acquires the media content segment of the http://example.com/per-3/rep-2048/seg01.3gp according to the TOI=101.

In the foregoing second implementation manner, the UE knows by using the first broadcast information (the broadcastContent subelement) in the delivery method element that in a media stream file whose a bit rate corresponding to the representation is 2048 kbps, the first media segment and the second media segment in the third period and the first media segment in the fourth period may be acquired in a broadcast manner. It is assumed that the UE needs to acquire media content segments of the two media segments, the UE first determines according to the MPD file and the first broadcast transmission information that the two media content segments may be acquired in a broadcast manner, and determines in the FDT that TOIs of the two media content segments are 101 and 120; then, the UE acquires the media content segment of the http:example.com/per-3/rep-2048/seg-01.3gp according to TOI=101, and the UE acquires the media content segment of the http:example.com/per-4/rep-2048/seg-01.3gp according to the TOI=120.

By using step 202 to step 204, when the UE is in the MBMS service area, the UE can acquire the media content segment of the second media stream file in a broadcast manner according to the USD information (in this embodiment, according to the indication information in the USD information).

Optionally, in another embodiment, step 204 may include:
determining a URI of a currently-to-be-acquired media content segment according to the MPD file;
determining, according to the first broadcast transmission information, whether the URI of the currently-to-be-acquired media content segment is a broadcast URI; and
when the URI of the currently-to-be-acquired media content segment is a broadcast URI, searching an FDT file of the USD information for a file transport identifier TOI corresponding to the URI of the currently-to-be-acquired media content segment, and acquiring the currently-to-be-acquired media content segment from the locally-saved media content segment according to the found TOI; or
when the URI of the currently-to-be-acquired media content segment is not a broadcast URI, acquiring the currently-to-be-acquired media content segment from the specified server in a unicast manner. That is, no matter whether the UE is in the MBMS service area, if the URI of the currently-to-be-acquired media content segment is not a broadcast URI, the currently-to-be-acquired media content segment needs to be acquired in a unicast manner.

For example, in the foregoing first implementation manner, it is assumed that the UE needs to acquire the first media segment in the third period of the media stream file whose bit rate corresponding to the representation is 2048 kbps, and determines according to the MPD file that the URI thereof is http:example.com/per-3/rep-2048/seg-01.3gp; if the UE learns by using the first broadcast transmission information (the broadcastContent subelement) in the delivery method element that the media stream file whose bit rate corresponding to the representation is 2048 kbps may be acquired in a broadcast manner, the UE determines that the media content segment (that is, the URI thereof is a broadcast URI) may be acquired in a broadcast manner; the UE determines in the FDT that TOIs of the two media content segments are 101, and then, the UE acquires the media content segment of http:example.com/per-3/rep-2048/seg-01.3gp according to TOI=101.

It is assumed that the UE needs to acquire the first media segment in the third period of the media stream file whose bit rate corresponding to the representation is 1024 kbps, the UE determines according to the MPD file that the URI thereof is http:example.com/per-3/rep-1024/seg-01.3gp; if the UE learns by using the first broadcast transmission information (the broadcastContent subelement) in the delivery method element that the media stream file whose bit rate corresponding to the representation is 2048 kbps may be acquired in a broadcast manner, the UE determines that the media content segment cannot be acquired in a broadcast manner (that is, the URI thereof is not a broadcast URI), and then, the UE acquires the media content segment in a unicast manner.

For another example, in the foregoing second implementation manner, it is assumed that the UE needs to acquire the first media segment in the third period of the media stream file whose bit rate corresponding to the representation is 2048 kbps, the UE determines according to the MPD file that the URI thereof is http:example.com/per-3/rep-2048/seg-01.3gp; the UE learns by using the indication information (the broadcastContent subelement) in the delivery method element that the media content segment of http://example.com/per-3/rep-2048/seg01.3gp may be acquired in a broadcast manner, and then, the UE determines that the media content segment may be acquired in a broadcast manner, and determines in the FDT that the TOI of the media content segment is 101, and further, the UE acquires the media content segment of *http:*//*example.com*/*per-3*/*rep-2048*/*seg01.3gp* according to TOI=101.

It is assumed that the UE needs to acquire the first media segment in the third period of the media stream file whose bit rate corresponding to the representation is 1024 kbps, the UE determines according to the MPD file that the URI thereof is http:example.com/per-3/rep-1024/seg-01.3gp; if the UE learns by using the first broadcast transmission information (the broadcastContent subelement) in the delivery method element that the media stream file whose bit rate corresponding to the representation is 1024 kbps cannot be acquired in a broadcast manner, the UE acquires the media content segment in a unicast manner.

205: When the UE is not in an MBMS service area, the UE acquires the media content segment of the first media stream file from a specified server in a unicast manner according to the indication information.

Specifically, whether the UE is in the MBMS service area may be determined in the following manners:
First: Determine whether a cell in which the UE is currently located supports an MBMS service.
Second: Determine whether MBMS service area information of a cell in which the UE is currently located matches service area service area information included in the USD.
Third: Determine whether the UE can acquire the media content segment of the second media stream file from broadcast information. When the currently-to-be-acquired media content segment does not exist in the local media content segment, it represents that the UE cannot receive the MBMS service because the UE exits the MBMS service area or due to another reason.

In this embodiment, the acquiring the media content segment of the first media stream file from a specified server in a unicast manner according to the indication information includes:
205a: Determine a second URI of the first media stream file or a second URI of a currently-to-be-acquired media content segment of the first media stream file according to the corresponding relationship between the first URI and the second URI in the indication information.
205b: Send a media content segment request (an HTTP GET request) to the specified server according to the second URI.
205c: Receive the media content segment, sent by the specified server, of the first media stream file.

It is easily known that, when the determined second URI is the URI of the first media stream file, the UE needs to first construct a URI of the media content segment of the first media stream file according to the URI of the first media stream file, and then, send the media content segment request to the specified server.

The currently-to-be-acquired media content segment of the first media stream file is a media content segment, corresponding to a next media content segment of the acquired last media content segment of the second media stream file, of the first media stream file.

For example, the UE initiates a request according to the MPD file, where the last media content segment, acquired by using a broadcast channel, of the second streaming media file is the seventh segment in the third period, and a next requested object of the UE is the eighth segment in the third period of the second streaming media file. In this case, it is determined that the media content segment that needs to be acquired in a unicast manner is the eighth segment in the third period.

Optionally, when the first media stream file includes media stream files at multiple quality levels, the UE needs to select, according to a current network transmission situation (for example, a data transmission rate), a media stream file at a quality level corresponding to the current network transmission situation. A specific selection method is the same as that in the prior art, and detailed descriptions are omitted herein.

During specific implementation, a packet data network gateway (Packet Data Network Gateway, PGW or P-GW for short) may acquire, by using the PSS server or the BM-SC, information stored in the PSS server and related to the media file (for example, the MPD file or URL information of the media file, where in this embodiment, the URL and the URI represent the same meaning), and sets, according to the information related to the media file, a rule of mandatorily routing to the PSS server. For example, the PGW saves the first URI, the second URI, and a corresponding relationship between the first URI and the second URI. The UE sends the media content segment request to the PGW, and the PGW forwards the media content segment request to the PSS server according to the foregoing corresponding relationship.

In a process of performing step 202 to step 205, if the UE receives a play instruction of the first media file, the UE sequentially presents the acquired media content segment according to the play instruction.

In this embodiment of the present invention, indication information is added in a delivery method element of USD information of a first media file, so as to instruct, by using the indication information, UE to continue to acquire the first media file, requested by the UE, from a specified server in a unicast manner when the UE is not in an MBMS service area, thereby implementing switch of the first media file from broadcast to unicast, and ensuring continuity of a streaming media service. In addition, because the indication information is carried in the delivery method element in this embodiment of the present invention, minor modification is made to the USD information, and the method is easily promoted and applied.

FIG. 4 shows a streaming media transmission method according to an embodiment of the present invention. In this embodiment, indication information includes second unicast transmission information, where the second unicast transmission information is used for indicating information about an entry address of the specified server. Referring to FIG. 4, the method includes:
301: A BM-SC sends USD information and an MPD file of a first media file in a broadcast manner, and UE in an MBMS service area receives the USD information and the MPD file of the first media file.

An implementation manner of step 301 is the same as that of step 201, and a difference lies in content of the USD information. In this embodiment, the USD information includes a delivery method element, and indication information in the delivery method element includes second unicast transmission information (which may be carried in a DASHunicastAccess subelement in the deliverymethod element), where the second unicast transmission information is used for indicating information about an entry address of the specified server.

In addition to the delivery method element, the USD information further includes a file delivery table instance (File Delivery Table Instance, FDT Instance for short), which is used for indicating an MPD file and a transport identifier (Transport Identifier, TOI for short) of each media content segment of the MPD file.

The following describes content of the USD information in this embodiment by using an example.
- *FDT-Instance*
   - *File. ContentLocation= 'http:*//*example.com*/*program-a.mpd'*
   - *FDT-Instance.File.TOI='10'*
   - *File. ContentLocation= 'http:*//*example.com*/*per-3*/*rep-2048*/*seg99.3gp'*
   - *File.TOI='101'*
   - *File. ContentLocation= 'http:*//*example.com*/*per-4*/*rep-2048*/*seg99.3gp'*
   - *File.TOI='102'*
   - *File. ContentLocation= 'http:*//*example.com*/*per-5*/*rep-2048*/*seg99.3gp'*
   - *File.TOI='103'*
- *userServiceDescription.deliveryMethod.r12:DASHunicastAccessURI= 'http:*//*dash-over-MBMS-server.operator.com'*

It is easily known that, the USD information may further include a start time (start time) and service duration (duration) of the MBMS selectable by a user, an MBMS service area identification list (MBMS SAI list), and one or more frequencies for playing the MBMS.

302: The BM-SC sends the media content segment to the UE in a service area in a broadcast manner.

303: The UE locally saves the received media content segment.

304: The UE acquires a media content segment of the first media file from the locally-saved media content segment according to the MPD file.

Specifically, step 304 includes:
determining a URI of a currently-to-be-acquired media content segment of the first media file according to the MPD file;
determining whether the URI of the currently-to-be-acquired media content segment exists in an FDT file of the USD information of the first media file; and
when the URI of the currently-to-be-acquired media content segment exists in the FDT file of the USD information of the first media file, searching an FDT file of the USD information for a file transport identifier TOI corresponding to the URI of the currently-to-be-acquired media content segment, and acquiring the currently-to-be-acquired media content segment from the locally-saved media content segment according to the found TOI,
for example, the UE acquires media content segment of *http:example.com*/*per-3*/*rep-2048*/*seg-99.3gp* according to TOI=101, and
the UE acquires media content segment of http:example.com/per-4/rep-2048/seg-99.3gp according to TOI=120; or
when the URI of the currently-to-be-acquired media content segment does not exist in the FDT file of the USD information, acquiring the currently-to-be-acquired media content segment from the specified server in a unicast manner.

In this embodiment, the UE learns, according to the FDT file, a media content segment that is acquired in a broadcast manner. It is easily known that, a manner (that is, adding the first broadcast transmission information in the indication information) in the embodiment shown in FIG. 3 may be used to tell the UE a second media stream file transmitted in a broadcast manner.

305: When the UE is not in an MBMS service area, the UE acquires a media content segment of a first media stream file from a specified server in a unicast manner according to indication information.

Specifically, whether the UE is in the MBMS service area may be determined in the following manners:
First: Determine whether a cell in which the UE is currently located supports an MBMS service.
Second: Determine whether MBMS service area information of a cell in which the UE is currently located matches service area service area information included in the USD.
Third: Determine whether the UE can acquire the media content segment of the second media stream file from broadcast information. When the currently-to-be-acquired media content segment does not exist in the local media content segment, it represents that the UE cannot receive the MBMS service because the UE exits the MBMS service area or due to another reason.

In this embodiment, the acquiring, by the UE, a media content segment of a first media stream file from a specified server in a unicast manner according to indication information includes:
305a: The UE generates, according to the second unicast transmission information, an extended message for requesting the media content segment (an extended HTTP GET request), that is, replaces, according to information about an entry address, a URI (the URI in the original server) of the first media stream file transmitted in a unicast manner in the indication information with a corresponding URI in the specified server.
305b: The UE sends, to the specified server, the extended message for requesting the media content segment.
305c: The UE receives a media content segment sent by the specified server.

An example of a format of a URI parameter that the UE needs to extend is as follows:
GET DASHunicastAccessURI?fileURI=http://example.com/per-2/rep-1024/seg-n.3gp
if DASHunicastAccessURI=pss server domain name= http:// pss-server for MBMS.operator.com,
the HTTP GET request sent by the UE to the PSS Server is:
   GET http://pss-server for MBMS.operator.com?fileURI=http://example.com/per-2/rep-1024/seg-n.3gp HTTP1.1.

In this embodiment of the present invention, indication information is added in a delivery method element of USD information of a first media file, so as to instruct, by using the indication information, UE to continue to acquire the first media file, requested by the UE, from a specified server in a unicast manner when the UE is not in an MBMS service area, thereby implementing switch of the first media file from broadcast to unicast, and ensuring continuity of a streaming media service. In addition, because the indication information is carried in the delivery method element in this embodiment of the present invention, minor modification is made to the USD information, and the method is easily promoted and applied.

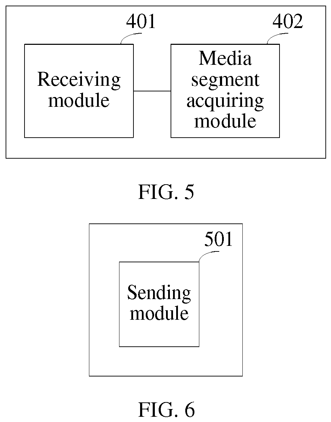

FIG. 5 shows UE according to an embodiment of the present invention. Referring to FIG. 5, the UE includes: a receiving module 401 and a media segment acquiring module 402.

The receiving module 401 is configured to receive USD information and an MPD file of a first media file.

The first media file includes a media stream file at at least one quality level, the media stream file at each quality level separately includes one media content segment or more continuous media content segments, the USD information includes a delivery method element, the delivery method element includes indication information, the indication information is used for indicating a first media stream file that is of the first media file and sent in a unicast manner, and the indication information is further used for instructing the UE to acquire a media content segment of the first media stream file from a specified server in a unicast manner when the UE is not in an MBMS service area.

In this embodiment, in addition to the delivery method element, the USD information further includes an FDT Instance, used for indicating an MPD file and a TOI of a media content segment indexed by the MPD file.

It is easily known that, in addition to the delivery method element, the USD information usually may further include a start time and service duration of an MBMS selectable by a user, an MBMS SAI list, and one or more frequencies for playing the MBMS.

The media segment acquiring module 402 is configured to: when the UE is in an MBMS service area, acquire a media content segment of a second media stream file of the first media file in a broadcast manner according to the MPD file; or when the UE is not in an MBMS service area, acquire a media content segment of the first media stream file from the specified server in a unicast manner according to the indication information.

Preferably, in this embodiment, the specified server is a PSS server, and the PSS server may be an HTTP server supporting DASH file transmission, and is equivalent to a local data storage device. The PSS server preferably saves all representations (that is, a union set of the second media stream file and the first media stream file) of the first media file; in this case, a transmission distance between a content memory and the user is closer, thereby improving the transmission efficiency. It is easily known that, the PSS server may further only save a representation (that is, the first media stream file) that is of the first media file and loaded to a unicast bearer. Content of the first media stream file and/or the second media stream file in the PSS server may be simultaneously acquired by a BM-SC. For example, after acquiring and storing the first media file and the MPD file, the BM-SC simultaneously stores the first media file and the MPD file into the PSS server by using FTP, and mirror software.

Certainly, the specified server may also be an original HTTP server. The original HTTP server may be a content provider, such as a content server of the youtube website, or a content server of a content provider of a CDN.

In an implementation manner of this embodiment, indication information includes first unicast transmission information, the first unicast transmission information includes a first URI, a second URI, and a corresponding relationship between the first URI and the second URI, the first URI is used for indicating an entry address of the second media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server.

In this implementation manner, the media segment acquiring module 402 includes:
a first determining unit, configured to determine a second URI of the first media stream file or a second URI of a currently-to-be-acquired media content segment of the first media stream file according to the corresponding relationship between the first URI and the second URI in the indication information;
a first sending unit, configured to send a media content segment request to the specified server according to the determined second URI; and
a first receiving unit, configured to receive the media content segment, sent by the specified server, of the first media stream file.

In this implementation manner, for a process of obtaining, by the media segment acquiring module 402, the media content segment of the first media stream file, refer to step 202 to step 205, and no further details are provided herein again.

In another implementation manner of this embodiment, the indication information includes second unicast transmission information, and the second unicast transmission information is used for indicating information about an entry address of the specified server; then, the media segment acquiring module 402 is further configured to generate, according to the second unicast transmission information, an extended message for requesting the media content segment, and request the media content segment of the first media stream file of the first media file from the specified server.

In this implementation manner, for a process of obtaining, by the media segment acquiring module 402, the media content segment of the first media stream file, refer to step 302 to step 305, and no further details are provided herein again.

Optionally, the indication information further includes first broadcast transmission information, the first broadcast transmission information includes a broadcast URI, and the broadcast URI is used for indicating an entry address of the second media stream file of the first media file or a download address of the media content segment of the second media stream file in the original server.

In this implementation manner, the media segment acquiring module 402 further includes:
a second receiving unit, configured to receive and locally save the media content segment, sent in a broadcast manner, of the second media stream file;
a second determining unit, configured to determine a broadcast URI of a currently-to-be-acquired media content segment of the second media stream file according to the MPD file and the first broadcast transmission information; and
an acquiring unit, configured to search, according to the determined broadcast URI, an FDT file of the USD information for a file transport identifier TOI corresponding to the broadcast URI, and acquire the currently-to-be-acquired media content segment of the second media stream file from the locally-saved media content segment according to the found TOI.

In this embodiment of the present invention, indication information is added in a delivery method element of USD information of a first media file, so as to instruct, by using the indication information, UE to continue to acquire the first media file, requested by the UE, from a specified server in a unicast manner when the UE is not in an MBMS service area, thereby implementing switch of the first media file from broadcast to unicast, and ensuring continuity of a streaming media service. In addition, because the indication information is carried in the delivery method element in this embodiment of the present invention, minor modification is made to the USD information, and the method is easily promoted and applied.

FIG. 6 shows a server according to an embodiment of the present invention, where the server is applied in a BM-SC. Referring to FIG. 6, the apparatus includes: a sending module 501.

The sending module 501 is configured to send USD information and an MPD file of a first media file in a broadcast manner, where the first media file includes a media stream file at at least one quality level, the media stream file at each quality level separately includes one or more media content segments, the USD information includes a delivery method element, the delivery method element includes indication information, the indication information is used for indicating a first media stream file that is of the first media file and sent in a unicast manner, and the indication information is further used for instructing UE to acquire a media content segment of the first media stream file from a specified server in a unicast manner when the UE is not in an MBMS service area.

Preferably, in this embodiment, the specified server is a PSS server, and the PSS server may be an HTTP server supporting DASH file transmission, and is equivalent to a local data storage device. The PSS server preferably saves all representations (that is, a union set of a second media stream file and the first media stream file) of the first media file; in this case, a transmission distance between a content memory and a user is closer, thereby improving the transmission efficiency. It is easily known that, the PSS server may further only save a representation (that is, the first media stream file) that is of the first media file and loaded to a unicast bearer. Content of the first media stream file and/or the second media stream file in the PSS server may be simultaneously acquired by the BM-SC. For example, after acquiring and storing the first media file and the MPD file, the BM-SC simultaneously stores the first media file and the MPD file into the PSS server by using FTP, and mirror software.

Certainly, the specified server may also be an original HTTP server. The original HTTP server may be a content provider, such as a content server of the youtube website, or a content server of a content provider of a CDN.

In an implementation manner of this embodiment, indication information includes first unicast transmission information, the first unicast transmission information includes a first URI, a second URI, and a corresponding relationship between the first URI and the second URI, the first URI is used for indicating an entry address of the second media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server.

Optionally, the server further includes:
a media content segment forwarding module, configured to receive a media stream file of the first media file, and synchronize the received media stream file to the specified server; and
a generating module, configured to acquire a second URI of the media stream file synchronized to the specified server, and construct the USD information of the first media file according to the second URI.

In another implementation manner of this embodiment, the indication information includes second unicast transmission information, and the second unicast transmission information is used for indicating information about an entry address of the specified server.

Optionally, the indication information further includes first broadcast transmission information, the first broadcast transmission information includes a broadcast URI, and the broadcast URI is used for indicating an entry address of the second media stream file of the first media file or a download address of a media content segment of the second media stream file in the original server.

In this embodiment of the present invention, indication information is added in a delivery method element of USD information of a first media file, so as to instruct, by using the indication information, UE to continue to acquire the first media file, requested by the UE, from a specified server in a unicast manner when the UE is not in an MBMS service area, thereby implementing switch of the first media file from broadcast to unicast, and ensuring continuity of a streaming media service. In addition, because the indication information is carried in the delivery method element in this embodiment of the present invention, minor modification is made to the USD information, and the method is easily promoted and applied.

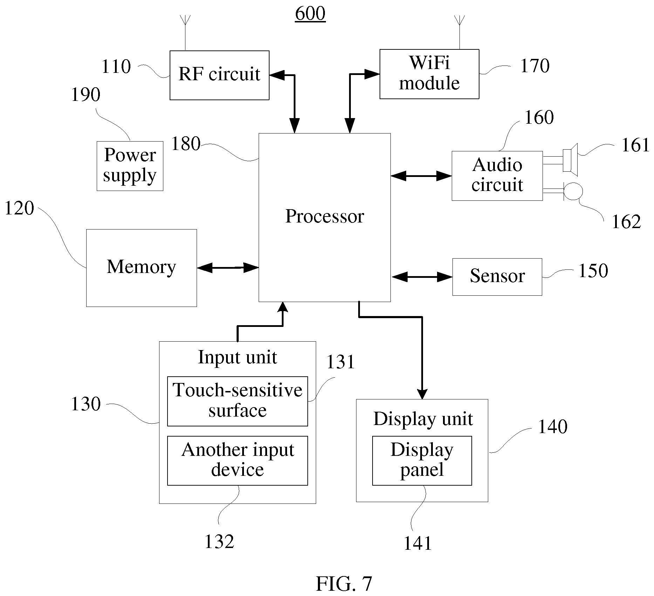

FIG. 7 is a schematic structural diagram of UE according to an embodiment of the present invention. The user equipment may be configured to implement the streaming media transmission method provided in the foregoing embodiments. Referring to FIG. 7, the user equipment 600 may include components such as a radio frequency (Radio Frequency, RF for short) circuit 110, a memory 120 including one or more computer readable storage mediums, an input unit 130, a display unit 140, a sensor 150, an audio circuit 160, a WiFi module 170, a processor 180 including one or more processing cores, and a power supply 190. A person skilled in the art may understand that the structure of the terminal device shown in FIG. 7 does not constitute a limitation to the terminal device, and the terminal device may include more components or fewer components than those shown in the figure, or some components may be combined, or a different component deployment may be used.

The RF circuit 110 may be configured to receive and send information, or receive and send a signal in a conversation process, and especially, after receiving downlink information of a base station, deliver the downlink information to one or more processors 180 for processing; in addition, send involved uplink data to the base station. Generally, the RF circuit 110 includes, but is not limited to, an antenna, at least one amplifier, a tuner, one or more oscillators, a subscriber identity module (SIM) card, a transceiver, a coupler, a low noise amplifier (Low Noise Amplifier, LNA for short), and a duplexer, and the like. In addition, the RF circuit 110 may also communicate with a network and another device through wireless communication. The wireless communication may use any communications standard or protocol, which includes, but is not limited to, a Global System for Mobile Communications (Global System of Mobile communication, GSM for short), a general packet radio service (General Packet Radio Service, GPRS for short), Code Division Multiple Access (Code Division Multiple Access, CDMA for short), Wideband Code Division Multiple Access (Wideband Code Division Multiple Access, WCDMA for short), Long Term Evolution (Long Term Evolution, LTE for short), an e-mail, and a short messaging service (Short Messaging Service, SMS for short).

The memory 120 may be configured to store a software program and module. The processor 180 runs the software program and module stored in the memory 120, to implement various functional applications and data processing. The memory 120 may mainly include a program storage area and a data storage area, where the program storage area may store an operating system, an application program required by at least one function (such as a voice play function, and an image play function), and the like, and the data storage area may store data (such as audio data, and an address book) that is created according to use of the user equipment 600, and the like. In addition, the memory 120 may include a high speed random access memory, or may also include a non-volatile memory, such as at least one magnetic disk storage device, a flash memory, or another volatile solid-state storage device. Accordingly, the memory 120 may further include a memory controller, so that the processor 180 and the input unit 130 access the memory 120.

The input unit 130 may be configured to receive input digit or character information, and generate keyboard, mouse, joystick, optical, or track ball signal input related to the user setting and function control. Specifically, the input unit 130 may include a touch-sensitive surface 131 and another input device 132. The touch-sensitive surface 131 may also be referred to as a touch screen or a touch panel, and may collect a touch operation of a user on or near the touch-sensitive surface (such as an operation of a user on or near the touch-sensitive surface 131 by using any suitable object or attachment, such as a finger or a touch pen), and drive a corresponding connection apparatus according to a preset program. Optionally, the touch-sensitive surface 131 may include two parts: a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and sends the touch point coordinates to the processor 180. Moreover, the touch controller can receive and execute a command sent by the processor 180. In addition, the touch-sensitive surface 131 may be implemented by using various types, such as a resistive type, a capacitance type, an infrared type, and a surface acoustic wave type. In addition to the touch-sensitive surface 131, the input unit 130 may further include the another input device 132. Specifically, the another input device 132 may include, but is not limited to, one or more of a physical keyboard, a functional key (such as a volume control key or a switch key), a track ball, a mouse, and a joystick.

The display unit 140 may be configured to display information input by the user or information provided for the user, and various graphical user interfaces of the user equipment 600. The graphical user interfaces may be formed by a graph, a text, an icon, a video, and any combination thereof. The display unit 140 may include a display panel 141. Optionally, the display panel 141 may be configured by using a liquid crystal display (Liquid Crystal Display, LCD for short), an organic light-emitting diode (Organic Light-Emitting Diode, OLED for short), or the like. Further, the touch-sensitive surface 131 may cover the display panel 141. After detecting a touch operation on or near the touch-sensitive surface 131, the touch-sensitive surface 131 transfers the touch operation to the processor 180, so as to determine a type of a touch event. Then, the processor 180 provides corresponding visual output on the display panel 141 according to the type of the touch event. Although, in FIG. 15, the touch-sensitive surface 131 and the display panel 141 are used as two separate parts to implement input and output functions, in some embodiments, the touch-sensitive surface 131 and the display panel 141 may be integrated to implement the input and output functions.

The user equipment 600 may further include at least one sensor 150, such as an optical sensor, a motion sensor, and other sensors. Specifically, the optical sensor may include an ambient light sensor and a proximity sensor. The ambient light sensor may adjust luminance of the display panel 141 according to brightness of the ambient light. The proximity sensor may switch off the display panel 141 and/or backlight when the user equipment 600 is moved to the ear. As one type of motion sensor, a gravity acceleration sensor may detect magnitude of accelerations in various directions (generally on three axes), may detect magnitude and a direction of the gravity when static, and may be applied to an application that recognizes the attitude of the mobile phone (for example, switching between landscape orientation and portrait orientation, a related game, and magnetometer attitude calibration), a function related to vibration recognition (such as a pedometer and a knock). Other sensors, such as a gyroscope, a barometer, a hygrometer, a thermometer, and an infrared sensor, which may be configured in the user equipment 600 are not further described herein.

The audio circuit 160, a loudspeaker 161, and a microphone 162 may provide audio interfaces between the user and the user equipment 600. The audio circuit 160 may convert received audio data into an electric signal and transmit the electric signal to the loudspeaker 161. The loudspeaker 161 converts the electric signal into a sound signal for output. On the other hand, the microphone 162 converts a collected sound signal into an electric signal. The audio circuit 160 receives the electric signal and converts the electric signal into audio data, and outputs the audio data to the processor 180 for processing. Then, the processor 180 sends the audio data to, for example, another terminal device by using the RF circuit 110, or outputs the audio data to the memory 120 for further processing. The audio circuit 160 may further include an earplug jack, so as to provide communication between a peripheral earphone and the user equipment 600.

WiFi is a short distance wireless transmission technology. The user equipment 600 may help, by using the WiFi module 170, a user to receive and send an e-mail, browse a webpage, and access streaming media, and the like, which provides wireless broadband Internet access for the user. Although FIG. 15 shows the WiFi module 170, it may be understood that, the WiFi module does not belong to a necessary constitution of the user equipment 600, and can be ignored according to demands and without changing the scope of the essence of the present invention.

The processor 180 is a control center of the user equipment 600, and connects to various parts of the mobile phone by using various interfaces and lines. By running or executing the software program and/or module stored in the memory 120, and invoking data stored in the memory 120, the processor 180 performs various functions and data processing of the user equipment 600, thereby performing overall monitoring on the mobile phone. Optionally, the processor 180 may include one or more processing cores. Preferably, the processor 180 may integrate an application processor and a modem, where the application processor mainly processes an operating system, a user interface, and an application program and the like, and the modem mainly processes wireless communication. It may be understood that, the foregoing modem may also not be integrated into the processor 180.

The user equipment 600 further includes the power supply 190 (such as a battery) for supplying power to the components. Preferably, the power supply may logically connect to the processor 180 by using a power supply management system, thereby implementing functions, such as charging, discharging, and power consumption management, by using the power supply management system. The power supply 190 may further include any component, such as one or more direct current or alternate current power supplies, a re-charging system, a power supply fault detection circuit, a power supply converter or an inverter, and a power supply state indicator.

Although not shown in the figure, the user equipment 600 may further include a camera, a Bluetooth module, and the like, which are not further described herein. Specifically, in this embodiment, the display unit of the terminal device is a touch screen display, and the terminal device further includes a memory and one or more programs, where the one or more programs are stored in the memory and one or more processors are configured to execute the one or more programs, and the one or more programs include instructions used for performing the following operations:
receiving, by the UE, USD information and an MPD file of a first media file, where the first media file includes a media stream file at at least one quality level, the media stream file at each quality level separately includes one or more media content segments, the USD information includes a delivery method element, the delivery method element includes indication information, the indication information is used for indicating a first media stream file that is of the first media file and sent in a unicast manner, and the indication information is further used for instructing the UE to acquire a media content segment of the first media stream file from a specified server in a unicast manner when the UE is not in an MBMS service area; and
when the UE is in an MBMS service area, acquiring a media content segment of a second media stream file of the first media file in a broadcast manner according to the USD information; or
when the UE is not in an MBMS service area, acquire a media content segment of the first media stream file from the specified server in a unicast manner according to the indication information.

Preferably, the specified server is a PSS server.

In an implementation manner of this embodiment, indication information includes first unicast transmission information, the first unicast transmission information includes a first URI, a second URI, and a corresponding relationship between the first URI and the second URI, the first URI is used for indicating an entry address of the first media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server.

In this implementation manner, the one or more programs further include instructions used for performing the following operations:
determining a second URI of the first media stream file or a second URI of a currently-to-be-acquired media content segment of the first media stream file according to the corresponding relationship between the first URI and the second URI in the indication information;
sending a media content segment request to the specified server according to the determined second URI; and
receiving the media content segment, sent by the specified server, of the first media stream file.

In another implementation manner of this embodiment, the indication information includes second unicast transmission information, and the second unicast transmission information is used for indicating information about an entry address of the specified server; and
the one or more programs further include instructions used for performing the following operations:
generating, according to the second unicast transmission information, an extended message for requesting the media content segment, and requesting the media content segment of the first media stream file of the first media file from the specified server.

Optionally, the indication information further includes first broadcast transmission information, the first broadcast transmission information includes a broadcast URI, and the broadcast URI is used for indicating an entry address of the second media stream file of the first media file or a download address of the media content segment of the second media stream file in the original server.

Further, the one or more programs further include instructions used for performing the following operations:
receiving and locally saving the media content segment, sent in a broadcast manner, of the second media stream file;
determining a broadcast URI of a currently-to-be-acquired media content segment of the second media stream file according to the MPD file and the first broadcast transmission information; and
searching, according to the determined broadcast URI, an FDT file of the USD information for a file transport identifier TOI corresponding to the broadcast URI, and acquiring the currently-to-be-acquired media content segment of the second media stream file from the locally-saved media content segment according to the found TOI.

Optionally, the one or more programs further include instructions used for performing the following operations:
receiving and locally saving the media content segment, sent in a broadcast manner, of the second media stream file;
determining a broadcast URI of a currently-to-be-acquired media content segment of the second media stream file according to the MPD file and the first broadcast transmission information; and
searching, according to the determined broadcast URI, an FDT file of the USD information for a file transport identifier TOI corresponding to the broadcast URI, and acquiring the currently-to-be-acquired media content segment of the second media stream file from the locally-saved media content segment according to the found TOI.

Optionally, the one or more programs further include instructions used for performing the following operations:
receiving and locally saving the media content segment, sent in a broadcast manner, of the second media stream file;
determining a URI of a currently-to-be-acquired media content segment according to the MPD file;
determining, according to the first broadcast transmission information, whether the URI of the currently-to-be-acquired media content segment is a broadcast URI; and
when the URI of the currently-to-be-acquired media content segment is a broadcast URI, searching an FDT file of the USD information for a file transport identifier TOI corresponding to the URI of the currently-to-be-acquired media content segment, and acquiring the currently-to-be-acquired media content segment from the locally-saved media content segment according to the found TOI; or
when the URI of the currently-to-be-acquired media content segment is not a broadcast URI, acquiring the currently-to-be-acquired media content segment from the specified server in a unicast manner.

In this embodiment of the present invention, indication information is added in a delivery method element of USD information of a first media file, so as to instruct, by using the indication information, UE to continue to acquire the first media file, requested by the UE, from a specified server in a unicast manner when the UE is not in an MBMS service area, thereby implementing switch of the first media file from broadcast to unicast, and ensuring continuity of a streaming media service. In addition, because the indication information is carried in the delivery method element in this embodiment of the present invention, minor modification is made to the USD information, and the method is easily promoted and applied.

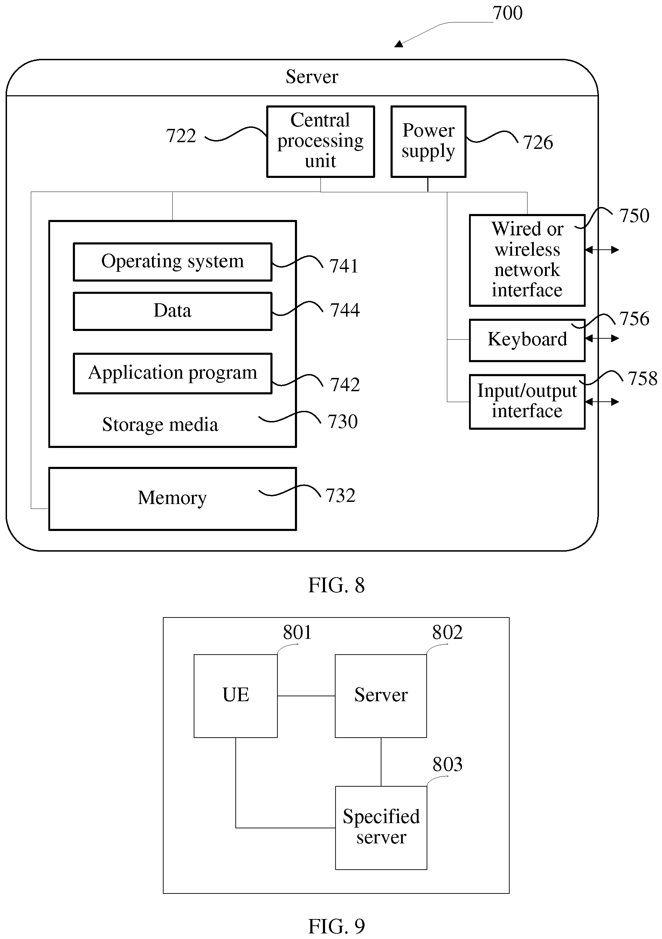

FIG. 8 is a schematic structural diagram of a server according to an embodiment of the present invention. The server is applied in a BM-SC. Referring to FIG. 8, the server 700 may have a great difference due to different configurations or performance, and may include one or more central processing units (central processing units, CPU for short) 722 (for example, one or more processors), a memory 732, one or more storage mediums 730 (for example, one or more mass storage devices) for storing an application program 742 or data 744. The memory 732 and the storage mediums 730 may be transient storage or persistent storage. A program stored in the storage medium 730 may include one or more modules (not shown in the figure), and each module may include a series of instruction operations in the server. Furthermore, the central processing unit 722 may be configured to communicate with the storage medium 730, and perform, in the server 700, a series of instruction operations in the storage medium 730. The server 700 may further include one or more power supplies 726, one or more wired or wireless network interfaces 750, one or more input/output interfaces 758, one or more keyboards 756, and/or, one or more operating systems 741, such as Windows ServerTM, Mac OS XTM, UnixTM, LinuxTM, and FreeBSDTM. Steps performed by the server in the embodiments shown in FIG. 2 and FIG. 3 may be based on a server structure shown in FIG. 7.

Specifically, the server further includes a memory and one or more programs, where the one or more programs are stored in the memory and one or more processors are configured to execute the one or more programs, and the one or more programs include an instruction used for performing the following operation:
sending user service description USD information of a first media file and an MPD file of the first media file in a broadcast manner, where the first media file includes a media stream file at at least one quality level, the media stream file at each quality level separately includes one or more media content segments, the USD information includes a delivery method element, the delivery method element includes indication information, the indication information is used for indicating a first media stream file that is of the first media file and sent in a unicast manner, and the indication information is further used for instructing UE to acquire a media content segment of the first media stream file from a specified server in a unicast manner when the UE is not in an MBMS service area.

Optionally, the specified server is a packet switched streaming service PSS server.

In an implementation manner of this embodiment of the present invention, the indication information includes first unicast transmission information, the first unicast transmission information includes a first URI, a second URI, and a corresponding relationship between the first URI and the second URI, the first URI is used for indicating an entry address of the first media stream file of the first media file in an original server or a download address of the media content segment of the first media stream file in the original server, and the second URI is used for indicating an entry address of the first media stream file of the first media file in the PSS server or a download address of the media content segment of the first media stream file in the PSS server.

Further, the one or more programs further include instructions used for performing the following operations:
receiving a media stream file of the first media file, and synchronizing the received media stream file to the specified server; and
acquiring a second URI of the media stream file synchronized to the specified server, and constructing the USD information of the first media file according to the second URI.

In another implementation manner of this embodiment of the present invention, the indication information includes second unicast transmission information, and the second unicast transmission information is used for indicating information about an entry address of the specified server.

Optionally, the indication information further includes first broadcast transmission information, the first broadcast transmission information includes a broadcast URI, and the broadcast URI is used for indicating an entry address of the second media stream file of the first media file or a download address of the media content segment of the second media stream file in the original server.

In this embodiment of the present invention, indication information is added in a delivery method element of USD information of a first media file, so as to instruct, by using the indication information, UE to continue to acquire the first media file, requested by the UE, from a specified server in a unicast manner when the UE is not in an MBMS service area, thereby implementing switch of the first media file from broadcast to unicast, and ensuring continuity of a streaming media service. In addition, because the indication information is carried in the delivery method element in this embodiment of the present invention, minor modification is made to the USD information, and the method is easily promoted and applied.

FIG. 9 shows a streaming media transmission system according to an embodiment of the present invention. Referring to FIG. 9, the system includes UE 801 in the embodiment shown in FIG. 4 or FIG. 6, a server 802 in the embodiment shown in FIG. 5 or FIG. 7, and a specified server 803.

Preferably, in this embodiment, the specified server is a PSS server, and the PSS server may be an HTTP server supporting DASH file transmission, and is equivalent to a local data storage device. The PSS server preferably saves all representations (that is, a union set of a second media stream file and a first media stream file) of a first media file; in this case, a transmission distance between a content memory and a user is closer, thereby improving the transmission efficiency. It is easily known that, the PSS server may further only save a representation (that is, the first media stream file) that is of the first media file and loaded to a unicast bearer. Content of the first media stream file and/or the second media stream file in the PSS server may be simultaneously acquired by a BM-SC. For example, after acquiring and storing the first media file and the MPD file, the BM-SC simultaneously stores the first media file and the MPD file into the PSS server by using FTP, and mirror software.

Certainly, the specified server may also be an original HTTP server. The original HTTP server may be a content provider, such as a content server of the youtube website, or a content server of a content provider of a content delivery network (Content Delivery Network, CDN).

In this embodiment of the present invention, indication information is added in a delivery method element of USD information of a first media file, so as to instruct, by using the indication information, UE to continue to acquire the first media file, requested by the UE, from a specified server in a unicast manner when the UE is not in an MBMS service area, thereby implementing switch of the first media file from broadcast to unicast, and ensuring continuity of a streaming media service. In addition, because the indication information is carried in the delivery method element in this embodiment of the present invention, minor modification is made to the USD information, and the method is easily promoted and applied.

It should be noted that: when the user equipment and the server provided in the foregoing embodiments are transmitting a streaming media, division of the foregoing functional modules is taken as an example for illustration. In actual application, the foregoing functions can be allocated to different functional modules and implemented according to a requirement, that is, an inner structure of a device is divided into different functional modules to implement all or some of the functions described above. Besides, the user equipment and the server provided in the foregoing embodiments and the method embodiment of transmitting a streaming media belong to one concept. For the specific implementation procedure, refer to the method embodiment, and no further details are provided herein again.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the scope of the present invention as defined by the claims.

## Claims

1. A streaming media transmission method, the method comprising:
receiving (101), by user equipment, UE, user service description, USD, information and a media presentation description, MPD, file of a first media file, wherein the first media file comprises a media stream file at at least one quality level, the media stream file at each quality level separately comprises one media content segment or more continuous media content segments, the USD information comprises a delivery method element, the delivery method element comprises indication information, the indication information is used for indicating a first media stream file that is of the first media file and sent in a unicast manner, and the indication information is further used for instructing the UE to acquire a media content segment of the first media stream file from a packet switched streaming service, PSS, server in a unicast manner when the UE is not in a multimedia broadcast multicast service, MBMS, service area; and
when the UE is not in an MBMS service area, acquiring (103) a media content segment of the first media stream file from the PSS server in a unicast manner according to the indication information;
wherein the indication information comprises first unicast transmission information, the first unicast transmission information comprises a first URI, a second URI, and a corresponding relationship between the first URI and the second URI, the first URI is used for indicating an entry address of the first media stream file of the first media file in an original server, and the second URI is used for indicating an entry address of the first media stream file of the first media file in the PSS server;
wherein the acquiring a media content segment of the first media stream file from the PSS server in a unicast manner according to the indication information comprises:
determining a second URI of the first media stream file or a second URI of a currently-to-be-acquired media content segment of the first media stream file according to the corresponding relationship between the first URI and the second URI in the indication information;
sending a media content segment request to the PSS server according to the determined second URI; and
receiving the media content segment, from the PSS server, of the first media stream file.

2. A streaming media transmission method, the method comprising:
sending (201, 301) user service description, USD, information of a first media file and an MPD file of the first media file in a broadcast manner, wherein the first media file comprises a media stream file at at least one quality level, the media stream file at each quality level separately comprises one media content segment or more media content segments, the USD information comprises a delivery method element, the delivery method element comprises indication information, the indication information is used for indicating a first media stream file that is of the first media file and sent in a unicast manner, and the indication information is further used for instructing UE to acquire a media content segment of the first media stream file from a packet switched streaming service, PSS, server in a unicast manner when the UE is not in an MBMS service area;
wherein the indication information comprises first unicast transmission information, the first unicast transmission information comprises a first URI, a second URI, and a corresponding relationship between the first URI and the second URI, the first URI is used for indicating an entry address of the first media stream file of the first media file in an original server, and the second URI is used for indicating an entry address of the first media stream file of the first media file in the PSS server.

3. User equipment, UE, comprising:
a receiving module (401), configured to receive user service description, USD, information and a media presentation description, MPD, file of a first media file, wherein the first media file comprises a media stream file at at least one quality level, the media stream file at each quality level separately comprises one media content segment or more continuous media content segments, the USD information comprises a delivery method element, the delivery method element comprises indication information, the indication information is used for indicating a first media stream file that is of the first media file and sent in a unicast manner, and the indication information is further used for instructing the UE to acquire a media content segment of the first media stream file from a packet switched streaming service, PSS, server in a unicast manner when the UE is not in an MBMS service area; and
a media segment acquiring module (402), configured to: when the UE is not in an MBMS service area, acquire a media content segment of the first media stream file from the PSS server in a unicast manner according to the indication information;
wherein the indication information comprises first unicast transmission information, the first unicast transmission information comprises a first URI, a second URI, and a corresponding relationship between the first URI and the second URI, the first URI is used for indicating an entry address of the first media stream file of the first media file in an original server, and the second URI is used for indicating an entry address of the first media stream file of the first media file in the PSS server;
wherein the media segment acquiring module (402) comprises:
a first determining unit, configured to determine a second URI of the first media stream file or a second URI of a currently-to-be-acquired media content segment of the first media stream file according to the corresponding relationship between the first URI and the second URI in the indication information;
a first sending unit, configured to send a media content segment request to the PSS server according to the determined second URI; and
a first receiving unit, configured to receive the media content segment, from the PSS server, of the first media stream file.

4. A server, comprising:
a sending module (501), configured to send user service description, USD, information of a first media file and an MPD file of the first media file in a broadcast manner, wherein the first media file comprises a media stream file at at least one quality level, the media stream file at each quality level separately comprises one media content segment or more media content segments, the USD information comprises a delivery method element, the delivery method element comprises indication information, the indication information is used for indicating a first media stream file that is of the first media file and sent in a unicast manner, and the indication information is further used for instructing UE to acquire a media content segment of the first media stream file from a packet switched streaming service, PSS, server in a unicast manner when the UE is not in an MBMS service area;
wherein the indication information comprises first unicast transmission information, the first unicast transmission information comprises a first URI, a second URI, and a corresponding relationship between the first URI and the second URI, the first URI is used for indicating an entry address of the first media stream file of the first media file in an original server, and the second URI is used for indicating an entry address of the first media stream file of the first media file in the PSS server.

5. A streaming media transmission system comprising the user equipment according to claim 3, the server according to claim 4, and a packet switched streaming service, PSS, server.

6. A computer-readable storage medium having a program recorded thereon; wherein the program when executed on a computer, makes the computer perform the method of claim 1.

7. A computer-readable storage medium having a program recorded thereon; wherein the program when executed on a computer, makes the computer perform the method of claim 2.

8. A computer program product, comprising a group of program code, that when executed on a computer makes the computer perform the method according to claim 1.

9. A computer program product, comprising a group of program code, that when executed on a computer makes the computer perform the method according to claim 2.

10. An apparatus, comprising a processor coupled with a memory storing executable instructions; wherein the executable instructions, when executed by the processor, cause the processor to execute the method of claim 1.

11. An apparatus, comprising a processor coupled with a memory storing executable instructions; wherein the executable instructions, when executed by the processor, cause the processor to execute the method of claim 2.

## Patentansprüche

1. Streaming-Medien-Übertragungsverfahren, das Verfahren umfassend:
Empfangen (101) durch eine Benutzervorrichtung (user equipment
- UE) von Benutzer-Dienstbeschreibungsinformationen (user service description information - USD-Informationen) und einer Mediendarstellungsbeschreibungs-(media presentation description
- MPD-)Datei einer ersten Mediendatei, wobei die erste Mediendatei eine Medien-Stream-Datei auf mindestens einem Qualitätsniveau umfasst, die Medien-Stream-Datei auf jedem Qualitätsniveau getrennt ein Medieninhaltssegement oder mehrere durchgehende Medieninhaltssegmente umfasst, die USD-Informationen ein Lieferverfahrenelement umfassen, das Lieferverfahrenelement Anzeigeinformationen umfasst, die Anzeigeinformationen zum Anzeigen einer ersten Medien-Stream-Datei verwendet werden, die von der ersten Medien-Datei ist und auf eine Unicast-Weise gesendet wird, und die Anzeigeinformationen ferner zum Anweisen der UE verwendet werden, ein Medieninhaltssegment der ersten Medien-Stream-Datei von einem paketvermittelten Streaming-Dienst-(packet switched streaming service - PSS-)Server auf eine Unicast-Weise zu erfassen, wenn sich die UE nicht in einem Multimedien-Broadcast-Multicast-Dienst-(multimedia braodcast multicast service - MBMS-)Dienstbereich befindet; und
wenn sich die UE sich nicht in einem MBMS-Dienstbereich befindet, Erfassen (103) eines Medieninhaltssegments der ersten Medien-Stream-Datei von dem PSS-Server auf eine Unicast-Weise gemäß den Anzeigeinformationen;
wobei die Anzeigeinformationen erste Unicast-Übertragungsinformationen umfassen, die ersten Unicast-Übertragungsinformationen eine erste URI, eine zweite URI und
eine entsprechende Beziehung zwischen der ersten URI und der zweiten URI umfassen, die erste URI zum Anzeigen einer Einsprungsadresse der ersten Medien-Stream-Datei der ersten Mediendatei in einem ursprünglichen Server verwendet wird und die zweite URI zum Anzeigen einer Einsprungsadresse der ersten Medien-Stream-Datei der ersten Mediendatei in dem PSS-Server verwendet wird;
wobei das Erfassen eines Medieninhaltssegments der ersten Medien-Stream-Datei von dem PSS-Server auf eine Unicast-Weise gemäß den Anzeigeinformationen Folgendes umfasst:
Bestimmen einer zweiten URI der ersten Medien-Stream-Datei oder einer zweiten URI eines aktuell zu erfassenden Medieninhaltssegments der ersten Medien-Stream-Datei gemäß der entsprechenden Beziehung zwischen der ersten URI und der zweiten URI in den Anzeigeinformationen;
Senden einer Medieninhaltssegments-Anforderung an den PSS-Server gemäß der bestimmten zweiten URI; und
Empfangen des Medieninhaltssegments von dem PSS-Server der ersten Medien-Stream-Datei.

2. Streaming-Medien-Übertragungsverfahren, das Verfahren umfassend:
Senden (201, 301) von Benutzer-Dienstbeschreibungsinformationen (USD-Informationen) einer ersten Mediendatei und einer MPD-Datei der ersten Mediendatei auf eine Broadcast-Weise, wobei die erste Mediendatei eine Medien-Stream-Datei auf mindestens einem Qualitätsniveau umfasst, die Medien-Stream-Datei auf jedem Qualitätsniveau getrennt ein Medieninhaltssegement oder mehrere Medieninhaltssegmente umfasst, die USD-Informationen ein Lieferverfahrenelement umfassen, das Lieferverfahrenelement Anzeigeinformationen umfasst, die Anzeigeinformationen zum Anzeigen einer ersten Medien-Stream-Datei verwendet werden, die von der ersten Medien-Datei ist und auf eine Unicast-Weise gesendet wird, und die Anzeigeinformationen ferner zum Anweisen der UE verwendet werden, ein Medieninhaltssegment der ersten Medien-Stream-Datei von einem paketvermittelten Streaming-Dienst-(PSS-)Server auf eine Unicast-Weise zu erfassen, wenn sich die UE nicht in einem MBMS-Dienstbereich befindet;
wobei die Anzeigeinformationen erste Unicast-Übertragungsinformationen umfassen, die ersten Unicast-Übertragungsinformationen eine erste URI, eine zweite URI und eine entsprechende Beziehung zwischen der ersten URI und der zweiten URI umfassen, die erste URI zum Anzeigen einer Einsprungsadresse der ersten Medien-Stream-Datei der ersten Mediendatei in einem ursprünglichen Server verwendet wird und die zweite URI zum Anzeigen einer Einstiegsadresse der ersten Medien-Stream-Datei der ersten Mediendatei in dem PSS-Server verwendet wird.

3. Benutzervorrichtung (UE), umfassend:
ein Empfangsmodul (401), das dazu ausgelegt ist, Benutzer-Dienstbeschreibungsinformationen (USD-Informationen) und eine Mediendarstellungsbeschreibungs-(MPD-)Datei einer ersten Mediendatei zu empfangen, wobei die erste Mediendatei eine Medien-Stream-Datei auf mindestens einem Qualitätsniveau umfasst, die Medien-Stream-Datei auf jedem Qualitätsniveau getrennt ein Medieninhaltssegement oder mehrere durchgehende Medieninhaltssegmente umfasst, die USD-Informationen ein Lieferverfahrenelement umfassen, das Lieferverfahrenelement Anzeigeinformationen umfasst, die Anzeigeinformationen zum Anzeigen einer ersten Medien-Stream-Datei verwendet werden, die von der ersten Medien-Datei ist und auf eine Unicast-Weise gesendet wird, und die Anzeigeinformationen ferner zum Anweisen der UE verwendet werden, ein Medieninhaltssegment der ersten Medien-Stream-Datei von einem paketvermittelten Streaming-Dienst-(PSS-)Server auf eine Unicast-Weise zu erfassen, wenn sich die UE nicht in einem Multimedien-Broadcast-Multicast-Dienst-(MBMS-)Dienstbereich befindet; und
ein Mediensegment-Erfassungsmodul (402), das zu Folgendem ausgelegt ist: wenn sich die UE nicht in einem MBMS-Dienstbereich befindet, Erfassen eines Medieninhaltssegments der ersten Medien-Stream-Datei von dem PSS-Server auf eine Unicast-Weise gemäß den Anzeigeinformationen;
wobei die Anzeigeinformationen erste Unicast-Übertragungsinformationen umfassen, die ersten Unicast-Übertragungsinformationen eine erste URI, eine zweite URI und eine entsprechende Beziehung zwischen der ersten URI und der zweiten URI umfassen, die erste URI zum Anzeigen einer Einsprungsadresse der ersten Medien-Stream-Datei der ersten Mediendatei in einem ursprünglichen Server verwendet wird und die zweite URI zum Anzeigen einer Einstiegsadresse der ersten Medien-Stream-Datei der ersten Mediendatei in dem PSS-Server verwendet wird;
wobei das Mediensegment-Erfassungsmodul (402) Folgendes umfasst:
eine erste Bestimmungseinheit, die dazu ausgelegt ist, eine zweite URI der ersten Medien-Stream-Datei oder eine zweite URI eines aktuell zu erfassenden Medieninhaltssegments der ersten Medien-Stream-Datei gemäß der entsprechenden Beziehung zwischen der ersten URI und der zweiten URI in den Anzeigeinformationen zu bestimmen;
eine erste Sendeeinheit, die dazu ausgelegt ist, eine Medieninhaltssegment-Anforderung an den PSS-Server gemäß der bestimmten zweiten URI zu senden; und
eine erste Empfangseinheit, die dazu ausgelegt ist, das Medieninhaltssegment von dem PSS-Server der ersten Medien-Stream-Datei zu empfangen.

4. Server, umfassend:
ein Sendemodul (501), das dazu ausgelegt ist, Benutzer-Dienstbeschreibungsinformationen (USD-Informationen) einer ersten Mediendatei und eine MPD-Datei der ersten Mediendatei auf eine Broadcast-Weise zu senden, wobei die erste Mediendatei eine Medien-Stream-Datei auf mindestens einem Qualitätsniveau umfasst, die Medien-Stream-Datei auf jedem Qualitätsniveau getrennt ein Medieninhaltssegement oder mehrere Medieninhaltssegmente umfasst, die USD-Informationen ein Lieferverfahrenelement umfassen, das Lieferverfahrenelement Anzeigeinformationen umfasst, die Anzeigeinformationen zum Anzeigen einer ersten Medien-Stream-Datei verwendet werden, die von der ersten Medien-Datei ist und auf eine Unicast-Weise gesendet wird, und die Anzeigeinformationen ferner zum Anweisen der UE verwendet werden, ein Medieninhaltssegment der ersten Medien-Stream-Datei von einem paketvermittelten Streaming-Dienst-(PSS-)Server auf eine Unicast-Weise zu erfassen, wenn sich die UE nicht in einem MBMS-Dienstbereich befindet;
wobei die Anzeigeinformationen erste Unicast-Übertragungsinformationen umfassen, die ersten Unicast-Übertragungsinformationen eine erste URI, eine zweite URI und eine entsprechende Beziehung zwischen der ersten URI und der zweiten URI umfassen, die erste URI zum Anzeigen einer Einsprungsadresse der ersten Medien-Stream-Datei der ersten Mediendatei in einem ursprünglichen Server verwendet wird und die zweite URI zum Anzeigen einer Einstiegsadresse der ersten Medien-Stream-Datei der ersten Mediendatei in dem PSS-Server verwendet wird.

5. Streaming-Medien-Übertragungssystem, umfassend die Benutzervorrichtung nach Anspruch 3, den Server nach Anspruch 4 und einen paketvermittelten Streaming-Dienst-(PSS-)Server.

6. Computerlesbares Speichermedium mit einem darauf aufgezeichneten Programm; wobei das Programm bei Ausführung auf einem Computer den Computer dazu veranlasst, das Verfahren nach Anspruch 1 durchzuführen.

7. Computerlesbares Speichermedium mit einem darauf aufgezeichneten Programm; wobei das Programm bei Ausführung auf einem Computer den Computer dazu veranlasst, das Verfahren nach Anspruch 2 durchzuführen.

8. Computerprogrammprodukt, umfassend eine Gruppe von Programmcode, die bei Ausführung auf einem Computer den Computer dazu veranlasst, das Verfahren nach Anspruch 1 durchzuführen.

9. Computerprogrammprodukt, umfassend eine Gruppe von Programmcode, die bei Ausführung auf einem Computer den Computer dazu veranlasst, das Verfahren nach Anspruch 2 durchzuführen

10. Vorrichtung, umfassend einen Prozessor, der mit einem Speicher gekoppelt ist, der ausführbare Anweisungen speichert; wobei die ausführbaren Anweisungen bei Ausführung durch den Prozessor den Prozessor dazu veranlassen, das Verfahren nach Anspruch 1 durchzuführen.

11. Vorrichtung, umfassend einen Prozessor, der mit einem Speicher gekoppelt ist, der ausführbare Anweisungen speichert; wobei die ausführbaren Anweisungen bei Ausführung durch den Prozessor den Prozessor dazu veranlassen, das Verfahren nach Anspruch 2 durchzuführen.

## Revendications

1. Procédé de transmission de données multimédias en continu, le procédé comprenant :
la réception (101), par un équipement utilisateur, UE, d'informations de description de service d'utilisateur, USD, et d'un fichier de description de présentation multimédia, MPD, d'un premier fichier multimédia, dans lequel le premier fichier multimédia comprend un fichier de flux multimédia à au moins un niveau de qualité, le fichier de flux multimédia à chaque niveau de qualité comprend séparément un segment de contenu multimédia ou plusieurs segments de contenu multimédia continus, les informations USD comprennent un élément de procédé de diffusion, l'élément de procédé de diffusion comprend des informations d'indication, les informations d'indication sont utilisées pour indiquer un premier fichier de flux multimédia qui appartient au premier fichier multimédia et envoyé en unidiffusion, et les informations d'indication sont en outre utilisées pour donner l'instruction à l'UE d'acquérir un segment de contenu multimédia du premier fichier de flux multimédia depuis un serveur de service de diffusion en continu à commutation de paquets, PSS, en unidiffusion lorsque l'UE n'est pas dans une zone de service de service multidiffusion radiodiffusion multimédia, MBMS ; et lorsque l'UE n'est pas dans une zone de service MBMS, l'acquisition (103) d'un segment de contenu multimédia du premier fichier de flux multimédia depuis le serveur PSS en unidiffusion selon les informations d'indication ;
dans lequel les informations d'indication comprennent des premières informations de transmission en unidiffusion, les premières informations de transmission en unidiffusion comprennent un premier URI, un second URI, et une relation correspondante entre le premier URI et le second URI, le premier URI est utilisé pour indiquer une adresse d'entrée du premier fichier de flux multimédia du premier fichier multimédia dans un serveur d'origine, et le second URI est utilisé pour indiquer une adresse d'entrée du premier fichier de flux multimédia du premier fichier multimédia dans le serveur PSS ;
dans lequel l'acquisition d'un segment de contenu multimédia du premier fichier de flux multimédia depuis le serveur PSS en unidiffusion selon les informations d'indication comprend :
la détermination d'un second URI du premier fichier de flux multimédia ou d'un second URI d'un segment de contenu multimédia actuellement à acquérir du premier fichier de flux multimédia selon la relation correspondante entre le premier URI et le second URI dans les informations d'indication ;
l'envoi d'une demande de segment de contenu multimédia au serveur PSS selon le second URI déterminé ; et
la réception du segment de contenu multimédia, en provenance du serveur PSS, du premier fichier de flux multimédia.

2. Procédé de transmission de données multimédias en continu, le procédé comprenant :
l'envoi (201, 301) d'informations de description de service d'utilisateur, USD, d'un premier fichier multimédia et d'un fichier MPD du premier fichier multimédia en radiodiffusion, dans lequel le premier fichier multimédia comprend un fichier de flux multimédia à au moins un niveau de qualité, le fichier de flux multimédia à chaque niveau de qualité comprend séparément un segment de contenu multimédia ou plusieurs segments de contenu multimédia, les informations USD comprennent un élément de procédé de diffusion, l'élément de procédé de diffusion comprend des informations d'indication, les informations d'indication sont utilisées pour indiquer un premier fichier de flux multimédia qui appartient au premier fichier multimédia et envoyé en unidiffusion, et les informations d'indication sont en outre utilisées pour donner l'instruction à l'UE d'acquérir un segment de contenu multimédia du premier fichier de flux multimédia depuis un serveur de service de diffusion en continu à commutation de paquets, PSS, en unidiffusion lorsque l'UE n'est pas dans une zone de service MBMS ;
dans lequel les informations d'indication comprennent des premières informations de transmission en unidiffusion, les premières informations de transmission en unidiffusion comprennent un premier URI, un second URI, et une relation correspondante entre le premier URI et le second URI, le premier URI est utilisé pour indiquer une adresse d'entrée du premier fichier de flux multimédia du premier fichier multimédia dans un serveur d'origine, et le second URI est utilisé pour indiquer une adresse d'entrée du premier fichier de flux multimédia du premier fichier multimédia dans le serveur PSS.

3. Equipement utilisateur, UE, comprenant :
un module de réception (401), conçu pour recevoir des informations de description de service d'utilisateur, USD, et un fichier de description de présentation multimédia, MPD, d'un premier fichier multimédia, dans lequel le premier fichier multimédia comprend un fichier de flux multimédia à au moins un niveau de qualité, le fichier de flux multimédia à chaque niveau de qualité comprend séparément un segment de contenu multimédia ou plusieurs segments de contenu multimédia continus, les informations USD comprennent un élément de procédé de diffusion, l'élément de procédé de diffusion comprend des informations d'indication, les informations d'indication sont utilisées pour indiquer un premier fichier de flux multimédia qui appartient au premier fichier multimédia et envoyé en unidiffusion, et les informations d'indication sont en outre utilisées pour donner l'instruction à l'UE d'acquérir un segment de contenu multimédia du premier fichier de flux multimédia depuis un serveur de service de diffusion en continu à commutation de paquets, PSS, en unidiffusion lorsque l'UE n'est pas dans une zone de service MBMS ; et
un module d'acquisition de segment multimédia (402), conçu pour :
lorsque l'UE n'est pas dans une zone de service MBMS, acquérir un segment de contenu multimédia du premier fichier de flux multimédia depuis le serveur PSS en unidiffusion selon les informations d'indication ;
dans lequel les informations d'indication comprennent des premières informations de transmission en unidiffusion, les premières informations de transmission en unidiffusion comprennent un premier URI, un second URI, et une relation correspondante entre le premier URI et le second URI, le premier URI est utilisé pour indiquer une adresse d'entrée du premier fichier de flux multimédia du premier fichier multimédia dans un serveur d'origine, et le second URI est utilisé pour indiquer une adresse d'entrée du premier fichier de flux multimédia du premier fichier multimédia dans le serveur PSS ;
dans lequel le module d'acquisition de segment multimédia (402) comprend :
une première unité de détermination, conçue pour déterminer un second URI du premier fichier de flux multimédia ou un second URI d'un segment de contenu multimédia actuellement à acquérir du premier fichier de flux multimédia selon la relation correspondante entre le premier URI et le second URI dans les informations d'indication ;
une première unité d'envoi, conçue pour envoyer une demande de segment de contenu multimédia au serveur PSS selon le second URI déterminé ; et
une première unité de réception, conçue pour recevoir le segment de contenu multimédia, en provenance du serveur PSS, du premier fichier de flux multimédia.

4. Serveur, comprenant :
un module d'envoi (501), conçu pour envoyer des informations de description de service d'utilisateur, USD, d'un premier fichier multimédia et un fichier MPD du premier fichier multimédia en radiodiffusion, dans lequel le premier fichier multimédia comprend un fichier de flux multimédia à au moins un niveau de qualité, le fichier de flux multimédia à chaque niveau de qualité comprend séparément un segment de contenu multimédia ou plusieurs segments de contenu multimédia, les informations USD comprennent un élément de procédé de diffusion, l'élément de procédé de diffusion comprend des informations d'indication, les informations d'indication sont utilisées pour indiquer un premier fichier de flux multimédia qui appartient au premier fichier multimédia et envoyé en unidiffusion, et les informations d'indication sont en outre utilisées pour donner l'instruction à l'UE d'acquérir un segment de contenu multimédia du premier fichier de flux multimédia depuis un serveur de service de diffusion en continu à commutation de paquets, PSS, en unidiffusion lorsque l'UE n'est pas dans une zone de service MBMS ;
dans lequel les informations d'indication comprennent des premières informations de transmission en unidiffusion, les premières informations de transmission en unidiffusion comprennent un premier URI, un second URI, et une relation correspondante entre le premier URI et le second URI, le premier URI est utilisé pour indiquer une adresse d'entrée du premier fichier de flux multimédia du premier fichier multimédia dans un serveur d'origine, et le second URI est utilisé pour indiquer une adresse d'entrée du premier fichier de flux multimédia du premier fichier multimédia dans le serveur PSS.

5. Système de transmission de données multimédias en continu comprenant l'équipement utilisateur selon la revendication 3, le serveur selon la revendication 4, et un serveur de service de diffusion en continu à commutation de paquets, PSS.

6. Support de stockage lisible par ordinateur sur lequel est enregistré un programme ; dans lequel, le programme lorsqu'il est exécuté sur un ordinateur, amène l'ordinateur à réaliser le procédé de la revendication 1.

7. Support de stockage lisible par ordinateur sur lequel est enregistré un programme, dans lequel, le programme lorsqu'il est exécuté sur un ordinateur, amène l'ordinateur à réaliser le procédé de la revendication 2.

8. Produit-programme d'ordinateur, comprenant un groupe de codes de programme qui, lorsqu'il est exécuté sur un ordinateur amène l'ordinateur à réaliser le procédé selon la revendication 1.

9. Produit-programme d'ordinateur, comprenant un groupe de codes de programme, qui lorsqu'il est exécuté sur un ordinateur amène l'ordinateur à réaliser le procédé selon la revendication 2.

10. Appareil, comprenant un processeur couplé à une mémoire stockant des instructions exécutables ; dans lequel les instructions exécutables, lorsqu'elles sont exécutées par le processeur, amènent le processeur à exécuter le procédé de la revendication 1.

11. Appareil, comprenant un processeur couplé à une mémoire stockant des instructions exécutables ; dans lequel les instructions exécutables, lorsqu'elles sont exécutées par le processeur, amènent le processeur à exécuter le procédé de la revendication 2.
